# EUROPÄISCHE PATENTSCHRIFT

(11) **EP 3 733 391 B1**
(45) Veröffentlichungstag und Bekanntmachung des Hinweises auf die Patenterteilung: **13.09.2023**
(21) Anmeldenummer: 20167801.8
(22) Anmeldetag: 02.04.2020
(51) Int. Cl.: B29D 99/00, B29C 70/44, B29C 65/02, B29C 33/02

(54) **VERFAHREN UND VORRICHTUNG ZUM HERSTELLEN EINES VERSTEIFTEN FLÄCHIGEN BAUTEIL AUS POLYMERMATERIAL**
METHOD AND APPARATUS OF MANUFACTURING A STIFFENED FLAT COMPONENT MADE OF POLYMERIC MATERIAL
PROCÉDÉ ET DISPOSITIF DE FABRICATION D'UN COMPOSANT PLAT RENFORCÉ EN MATIÈRE POLYMÈRE

(30) Priorität: 03.04.2019 DE 102019108769
(43) Veröffentlichungstag der Anmeldung: 04.11.2020
(73) Patentinhaber: Airbus Operations GmbH, 21129 Hamburg (DE)
(72) Erfinder: Jörn, Paul, 21129 Hamburg (DE); Hinz, Remo, 21129 Hamburg (DE)
(74) Vertreter: KASTEL Patentanwälte PartG mbB

(56) Entgegenhaltungen:
- DE-T2- 69 809 427
- US-A1- 2013 092 309
- Radlmaier et al.: "Interlaminar fracture toughness of carbon fiber reinforced thermoplastic in-situ joints", AIP Conference Proceedings 1779 , 31. Oktober 2016 (2016-10-31), XP002800141, DOI: 10.1063/1.4965562 Gefunden im Internet: URL:https://aip.scitation.org/doi/pdf/10.1 063/1.4965562 [gefunden am 2020-08-26]

## Beschreibung

Die vorliegende Erfindung betrifft ein Verfahren und eine Vorrichtung zum Herstellen eines versteiften flächigen Bauteils aus Polymermaterial zur Verwendung im Luftfahrzeugbau, das ein flächiges Bauteil aus Polymermaterial und daran integrierte Versteifungsprofile aus Polymermaterial aufweist.

Bauteile für Flugzeuge müssen zur Kraftstoffeinsparung ein möglichst geringes Gewicht aufweisen. Gleichzeitig müssen sie aus Sicherheitsgründen über eine hohe Festigkeit und Steifigkeit verfügen. Diese Ziele werden durch mechanisch stabile Materialien mit geringem spezifischem Gewicht und eine materialsparende Bauweise, wie die Halbschalenbauweise, erreicht.

Es ist bekannt, wesentliche Segmente des Rumpfes eines Luftfahrzeugs, wie Außenhaut, Spanten und Versteifungsprofile, wie Omega-Stringer, aus dem Leichtmetall Aluminium und dessen Legierungen herzustellen.

Eine weitere Gewichtseinsparung wird durch den Einsatz von duroplastischen Verbundwerkstoffen, wie kohlenstofffaserverstärkten Kunststoffen (CFK) (engl. "carbon fiber reinforced polymer" CFRP), beim Bau von Panels für den Luftfahrzeugrumpf ermöglicht. Derartige CFKs weisen eine Matrix aus duroplastischem Polymer mit darin eingebetteten Kohlenstofffasern auf.

Bei der Fertigung von duroplastischen CFK-Panels wird zunächst auf einem männlichen Formwerkzeug die duroplastische Außenhaut hergestellt. Anschließend werden die duroplastischen Stringer auf einem weiblichen Formwerkzeug auf die Außenhaut integriert. Hierzu werden die Stringer aufgeklebt, wonach das gebildete CFK-Panel unter Hitze- und Druckeinwirkung gehärtet und konsolidiert wird.

Für die Stringer-Integration werden konsolidierte Omega-Stringer an ihren Fußflächen mit Klebstoff versehen. In den Hohlraum der Omega-Stringer werden Folienschläuche eingelegt. Danach werden die Stringer auf die Außenhaut geklebt. In einem Autoklav findet die Co-Konsolidierung von Außenhaut und Stringern und damit die Stringer-Integration statt. Nach der Integration müssen die Folienschläuche rückstandslos aus dem Hohlraum zwischen Stringer und Außenhaut entfernt werden. Die Schlauchkerntechnik ermöglicht es, die Außenhaut auch in den Bereichen, in denen die Stringer die Außenhaut abdecken, zu konsolidieren.

Neben den duroplastischen Verbundwerkstoffen finden zunehmend thermoplastische Verbundwerkstoffe Anwendung im Flugzeugbau. Dies hängt mit der Entwicklung von Hochtemperatur-thermoplastischen Materialien und Hochleistungskunststoffen zusammen. Sie verfügen über einen hohen Schmelzpunkt, eine hohe Beständigkeit gegen Hitze und Chemikalien und eine hohe Festigkeit und Steifigkeit. Zu diesen Hochtemperatur-thermoplastischen Materialien gehören die Polyaryletherketone (PAEK), wie Polyetheretherketon (PEEK) und Polyetherketonketon (PEKK). Sie können zu thermoplastischen Verbundwerkstoffen verarbeitet werden, die für den Flugzeugbau geeignet sind.

Omega-Stringer umfassend thermoplastischen CFK können auf eine Außenhaut umfassend thermoplastischen CFK integriert werden. Die Stringer-Integration erfolgt unter Anwendung von Schweißtechniken und nicht durch Kleben. Hierfür werden Temperaturen von 350 bis 400 °C benötigt.

Für die Integration von thermoplastischen Stringern an einer thermoplastischen Außenhaut sind im Stand der Technik verschiedene Techniken bekannt. Bei einem ersten Schweißverfahren werden die Außenhaut und die Versteifungsprofile lokal co-konsolidiert. Bei einem zweiten Schweißverfahren werden die thermoplastischen Polymere durch Induktionsschweißen zusammengefügt. Bei der Weiterentwicklung dieser Schweißtechniken wurde darauf fokussiert, das lokale Co-Konsolidieren durch ein globales Co-Konsolidieren zu ersetzen. Hierfür wurde die Schlauchkerntechnik weiterentwickelt, insbesondere wurde an der technischen Reife des Folienschlauchs gearbeitet wurde.

Zusammenfassend gibt es derzeit die folgenden Konzepte für die Integration von Omega-Stringers aus thermoplastischem Verbundwerkstoff: (1) Das Einbringen eines steifen Kerns oder eines halbsteifen Kerns, wie aus einem Silikon; (2) Das Verschweißen unter lokalem Co-Konsolidieren des Stringer-Fußes; (3) Das Einbringen eines Schlauchs in den Omega-Stringer. Das Verfahren ist aufwändig.

Radlmaier et al.: "Interlaminar fracture toughness of carbon fiber reinforced thermoplastic in-situ joints", AIP Conference Proceedings 1779, 31. Oktober 2016 (2016-10-31), DOI: 10.1063/1.4965562, aufgefunden am 2020-08-26 unter https://aip.scitation.org./doi/pdf/10.1063/1.4965562 offenbart geschlossene Omegastringer und darauf basierende flächige Bauteile.

DE 698 09 427 T2 offenbart ein Verfahren zum Herstellen eines versteiften flächigen Bauteils, bei dem Versteifungselemente mit der Bauteilhaut verschweißt werden.

Es ist Aufgabe der vorliegenden Erfindung, ein verbessertes Verfahren für die Herstellung von thermoplastischen versteiften flächigen Bauteilen bereitzustellen, das insbesondere das Risiko für eine Deformation von Versteifungsprofilen bei der Herstellung verringert.

Zum Lösen dieser Aufgabe schlägt die Erfindung ein Verfahren nach Anspruch 1 vor.

Vorteilhafte Ausgestaltungen der Erfindung sind Gegenstand der Unteransprüche.

Gemäß einem ersten Aspekt schafft die Erfindung ein Verfahren zum Herstellen eines versteiften flächigen Bauteils auf Polymerbasis insbesondere zur Verwendung im Luftfahrzeugbau umfassend ein flächiges Bauteil auf Polymerbasis und daran befestigte Versteifungsprofile auf Polymerbasis. Dieses Verfahren umfasst mindestens folgende Schritte:
a) Bereitstellen von Versteifungshohlprofilen, die thermoplastischen Verbundwerkstoff umfassen, eines flächigen Bauteils, das thermoplastischen Verbundwerkstoff umfasst, eines Formwerkzeugs und eines gasdichten Behälters;
b) Anordnen der Versteifungshohlprofile und des flächigen Bauteils auf der Oberfläche des Formwerkzeugs unter flächigem Inkontaktbringen einer Versteifungshohlprofilwand der Versteifungshohlprofile mit dem flächigen Bauteil;
c) Erhitzen der in Schritt b) erhaltenen Anordnung in dem gasdichten Behälter mit einem unter Überdruck stehenden Heizfluid, dessen Temperatur oberhalb der Schmelztemperatur des thermoplastischen Verbundwerkstoffs liegt, und/oder in dem mit einem Überdruck beaufschlagten gasdichten Behälter mit einer in dem Formwerkzeug ausgebildeten Heizeinrichtung, die mindestens die Formwerkzeugoberfläche auf eine Temperatur oberhalb der Schmelztemperatur des thermoplastischen Verbundwerkstoffs erhitzt, unter Kühlen der Versteifungshohlprofile mit einem durch den Hohlraum der Versteifungshohlprofile strömenden, unter Überdruck stehenden Kühlfluid mit einer Temperatur unterhalb der Schmelztemperatur des thermoplastischen Verbundwerkstoffs;
d) Abkühlen der Anordnung auf Umgebungstemperatur unter stoffschlüssigem Verbinden der Versteifungshohlprofilwände mit dem flächigen Bauteil.

Die gemäß Schritt a) bereitgestellten Versteifungshohlprofile und das flächige Bauteil können aus thermoplastischem Verbundwerkstoff bestehen. Sie können aber auch thermoplastischen Verbundwerkstoff in Kombination mit einem oder mehreren anderen Materialien enthalten.

Es ist bevorzugt, dass die Versteifungshohlprofile geschlossene Omega-Stringer sind, die einen Omega-Stringer mit Stringer-Kappe, Stringer-Stegen und Stringer-Füßen und eine mit den Stringer-Füßen verbundene, insbesondere stoffschlüssig verbundene Abdecklage oder eine die Stringer-Füße bildende Abdecklage umfassen, wobei die Abdecklage oder die Abdecklage und die Stringer-Füße die Versteifungshohlprofilwand bilden, die für den flächigen Kontakt mit dem flächigen Bauteil vorgesehen ist. Vorzugsweise werden die Oberflächen der Stringer-Füße vollständig von der Abdecklage abgedeckt.

Es ist bevorzugt, dass Schritt a) das Bereitstellen von Versteifungshohlprofilen und/oder eines flächigen Bauteils umfasst, die einen thermoplastischen Verbundwerkstoff enthalten, der umfasst:
- ein oder mehrere thermoplastische Polymere als Matrixmaterial, die unter Hochtemperatur-thermoplastischen Polymeren, Hochleistungskunststoffen, teilkristallinen Hochleistungskunststoffen, Polyaryletherketonen (PAEK), wie Polyetherketonketon (PEKK), Polyetherketon (PEK), Polyetheretherketonen (PEEK), Polyetheretheretherketon (PEEEK), Polyetheretherketonketon (PEEKK) und Polyetherketon-etherketonketon (PEKEKK), insbesondere unter PEEK und PEKK, ausgewählt werden, und
- ein Verstärkungsmaterial, vorzugsweise synthetische Fasern, besonders bevorzugt Kohlenstofffasern, das/die in das Matrixmaterial eingebettet ist/sind.

Die Schmelztemperatur und die Glasübergangstemperatur von Polymeren, wie den Polyaryletherketonen, variieren in Abhängigkeit von der Kettenlänge, dem Anteil und der Abfolge der Ethergruppen und Ketogruppen und den Verfahrensbedingungen, unter denen das betreffende PAEK hergestellt wurde. Die Glasübergangstemperatur (T_{g}) vieler Polyaryletherketone liegt im Bereich von etwa 140 °C bis etwa 170 °C , ihre Schmelztemperatur (Tf) im Bereich von etwa 340 °C bis 380 °C, ihre Wärmeformbeständigkeit liegt in einem Bereich von etwa 150 °C bis etwa 180 °C. Als Dauergebrauchstemperatur der Polyaryletherketone wird in der Literatur beispielhaft 250 °C angegeben.

Es ist bevorzugt, dass Schritt a) das Bereitstellen des flächigen Bauteils im nicht konsolidierten Zustand und der Versteifungshohlprofile im konsolidierten Zustand umfasst.

Es ist bevorzugt, dass Schritt a) das Bereitstellen eines Formwerkzeugs, insbesondere männlichen Formwerkzeugs mit Kavitäten zum Aufnehmen der Versteifungshohlprofile umfasst.

Es ist bevorzugt, dass Schritt a) das Bereitstellen eines Formwerkzeugs, insbesondere männlichen Formwerkzeugs mit Kavitäten zum Aufnehmen der Versteifungshohlprofile und mit einer Versteifungshohlprofil-Kühleinheit, die benachbart zu den Kavitäten ausgebildet ist, umfasst.

Es ist bevorzugt, dass Schritt a) das Bereitstellen eines männlichen Formwerkzeugs mit einem konvex geformten Oberflächenbereich zum Ablegen des flächigen Bauteils umfasst.

Es ist bevorzugt, dass Schritt a) das Bereitstellen eines weiblichen Formwerkzeugs mit einem konkav geformten Oberflächenbereich zum Ablegen des flächigen Bauteils umfasst.

Es ist bevorzugt, dass Schritt a) das Bereitstellen eines Formwerkzeugs, insbesondere weiblichen Formwerkzeugs, mit einer Heizeinrichtung zum Erhitzen der auf dem Formwerkzeug abgelegten Anordnung aus flächigem Bauteil und Versteifungshohlprofile umfasst.

Es ist bevorzugt, dass Schritt a) das Bereitstellen eines Autoklavs oder eines Pressklavs als gasdichter Behälter umfasst.

Es ist bevorzugt, dass Schritt a) das Bereitstellen von Versteifungshohlprofilen umfasst, deren Endabschnitte so ausgebildet sind, dass sie die Funktion von Nieten zur Befestigung der Versteifungshohlprofile an dem flächigen Bauteil haben.

Es ist bevorzugt, dass Schritt b) das Anordnen der Versteifungshohlprofile in den Kavitäten des Formwerkzeugs und das Ablegen des flächigen Bauteils auf der Oberfläche des Formwerkzeugs umfasst

Es ist bevorzugt, dass Schritt b) das Anordnen des flächigen Bauteils auf der Oberfläche des Formwerkzeugs und das Positionieren der Versteifungshohlprofile auf der Oberfläche des flächigen Bauteils umfasst

Es ist bevorzugt, dass Schritt b) das Inkontaktbringen der Oberfläche der Abdecklage mit der Oberfläche des flächigen Bauteils umfasst.

Es ist bevorzugt, dass Schritt c) das Verwenden von Luft oder eines inerten Gases als Heizfluid und/oder als Kühlfluid umfasst.

Es ist bevorzugt, dass Schritt c) das Verwenden eines Heizfluids und/oder eines beheizten Formwerkzeugs mit einer Temperatur, die mindestens 10 °C über der Schmelztemperatur des thermoplastischen Verbundwerkstoffs liegt, und/oder eines Kühlfluids mit einer Temperatur, die mindestens 50 °C unter der Schmelztemperatur des thermoplastischen Verbundwerkstoffs liegt, umfasst.

Es ist bevorzugt, dass Schritt c) das Verwenden eines Heizfluids und/oder eines beheizten Formwerkzeugs mit einer Temperatur von etwa 5 °C bis etwa 120 °C, vorzugsweise etwa 10 °C bis etwa 100 °C, noch bevorzugter etwa 10 °C bis etwa 80 °C, besonders bevorzugt etwa 10 °C bis etwa 60 °C über der Schmelztemperatur des thermoplastischen Verbundwerkstoffs und eines Kühlfluids (40) mit einer Temperatur von etwa 50 °C bis etwa 250 °C, vorzugsweise etwa 60 °C bis etwa 180 °C, bevorzugter etwa 70 °C bis etwa 160 °C, besonders bevorzugt etwa 90 °C bis etwa 140 °C unter der Schmelztemperatur des thermoplastischen Verbundwerkstoffs umfasst.

Das Kühlfluid kann beispielsweise auch eine Temperatur etwa bei Raumtemperatur oder Umgebungstemperatur aufweisen, wenn durch die sonstigen Verfahrensbedingungen, wie Aggregatzustand von Kühlfluid und Heizfluid und Temperatur des Heizfluids, gewährleistet ist, dass im Kontaktbereich von Versteifungshohlprofilwand der Versteifungshohlprofile und flächigem Bauteil eine so hohe Temperatur herrscht, dass es durch Schmelzen oder Erweichen und anschließendes Abkühlen zur stoffschlüssigen Verbindung dieser Bauteile kommt.

Der Fachmann wählt die Temperatur des Heizfluids so knapp über der Schmelztemperatur des thermoplastischen Verbundwerkstoffs und die Temperatur des Kühlfluids so deutlich unter der Schmelztemperatur des thermoplastischen Verbundwerkstoffs, dass das thermoplastische Polymer im thermoplastischen Verbundwerkstoff an der Kontaktfläche zwischen den Versteifungshohlprofilen und dem flächigen Bauteil schmilzt und/oder plastifiziert und/oder erweicht und in den sonstigen Abschnitten der Versteifungshohlprofile nicht schmilzt und/oder nicht erweicht und/oder elastisch bleibt und/oder formstabil bleibt.

Bei Verwendung von PEEK kann das Heizfluid beispielsweise eine Temperatur von etwa 350 °C bis etwa 400 °C und/oder das Kühlfluid eine Temperatur von etwa 200 °C bis etwa 250 °C aufweisen. Die Temperatur des Kühlfluids kann vorzugsweise auch bei ca. 150 °C und damit im Bereich der Wärmeformbeständigkeit von PEEK liegen. Besonders bevorzugt kann die Temperatur des Kühlfluids bei ca. 140 °C und damit im Bereich der Glasübergangstemperatur von PEEK liegen.

Die Temperatur des Kühlfluids kann bei PEEK wie bei den sonstigen Hochleistungskunststoffen vorzugsweise bei einer Temperatur liegen, die so niedrig gewählt ist, dass die Temperatur der zu kühlenden Bauteile der Versteifungshohlprofile unter der Wärmeformbeständigkeitstemperatur und insbesondere der Glasübergangstemperatur bleibt.

Es ist bevorzugt, dass Schritt c) das Verwenden eines Heizfluids und/oder eines beheizten Formwerkzeugs in Kombination mit einem Kühlfluid umfasst, deren Temperatur so gewählt wird, dass das flächige Bauteil und die Versteifungshohlprofilwand, insbesondere nur die an das flächige Bauteil angrenzende Seite der Versteifungshohlprofilwand, über die Schmelztemperatur des thermoplastischen Verbundwerkstoffs erhitzt werden und die sonstigen Abschnitte der Versteifungshohlprofile bei einer Temperatur unter der Schmelztemperatur des thermoplastischen Verbundwerkstoffs bleiben.

Es ist bevorzugt, dass Schritt c) das Verwenden eines Heizfluids und/oder eines beheizten Formwerkzeugs in Kombination mit einem Kühlfluid umfasst, deren Temperatur so gewählt wird, dass die Versteifungshohlprofilwand und das flächige Bauteil nach Abkühlen stoffschlüssig miteinander verbunden werden und/oder die sonstigen Abschnitte der Versteifungshohlprofile formstabil bleiben und/oder die Versteifungshohlprofile luftdicht bleiben.

Es ist bevorzugt, dass Schritt c) das Erzeugen eines Drucks p_{A} im Bereich von etwa 2 bis 40 bar, vorzugsweise etwa 5 bis 20 bar, insbesondere etwa 8 bis 12 bar, durch Druckerzeugen im gasdichten Behälter und/oder durch ein externes Druckerzeugungssystem umfasst.

Es ist bevorzugt, dass Schritt c) das Erzeugen eines Überdrucks in den Versteifungshohlprofilen umfasst, bei dem die Versteifungshohlprofilwand des Versteifungshohlprofils oder die Abdecklage der geschlossenen Omega-Stringer genau der angestrebten Oberflächenform des Luftfahrzeugbauteils folgt.

Es ist bevorzugt, dass Schritt c) das Erzeugen eines Überdrucks in dem gegebenenfalls zwischen den Kavitäten und den in die Kavitäten abgelegten Versteifungshohlprofilen vorhandenen Spalt umfasst.

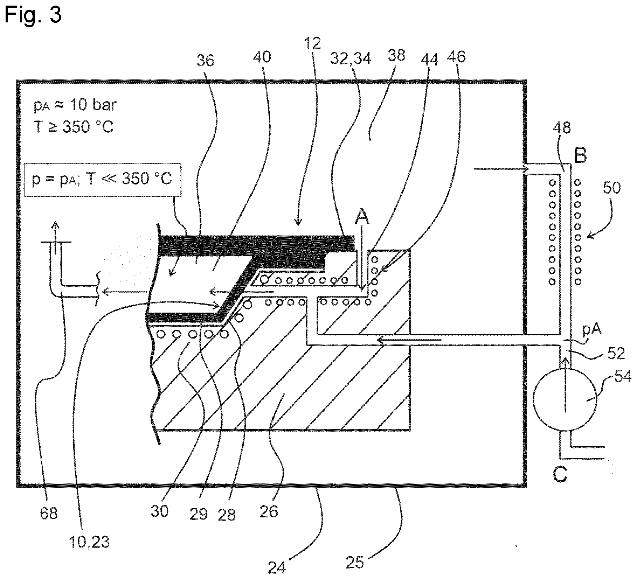

Es ist bevorzugt, dass das Kühlen der Versteifungshohlprofile in Schritt c) das Einleiten von Heizfluid aus dem gasdichten Behälter in eine im männlichen Formwerkzeug ausgebildete Fluidleitung-A, die mit einer Fluidkühleinheit-A zum Kühlen des Heizfluids ausgestattet ist, und Einleiten des gebildeten Kühlfluids in den Hohlraum in den Versteifungshohlprofilen umfasst (Verfahren A in Fig. 3)).

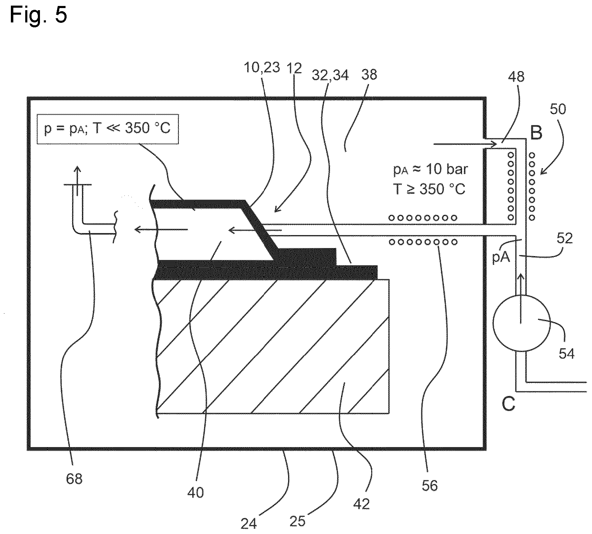

Es ist bevorzugt, dass das Kühlen der Versteifungshohlprofile in Schritt c) das Herausleiten von Heizfluid aus dem gasdichten Behälter in eine externe Fluidleitung B, die mit einer Fluidkühleinheit B zum Kühlen des Heizfluids ausgestattet ist, und Einleiten des gebildeten Kühlfluids in den gasdichten Behälter und nachfolgend den Hohlraum in den Versteifungshohlprofilen umfasst (Verfahren B in Fig. 3 und Fig. 5)).

Es ist bevorzugt, dass das Kühlen der Versteifungshohlprofile in Schritt c) das Erzeugen von unter Überdruck stehendem Kühlfluid außerhalb des gasdichten Behälters in einem separaten Druckerzeugungssystem und/oder mit einer Pumpe und Einleiten des Kühlfluids durch eine Fluidleitung-C in den gasdichten Behälter und nachfolgend den Hohlraum in den Versteifungshohlprofilen umfasst (Verfahren C in Fig. 3 Fig. 5)).

Es ist bevorzugt, dass Schritt c) das Verwenden eines gekühlten oder isolierten Schlauches oder Rohrs für das Einleiten des unter Überdruck stehenden Kühlfluids in den Hohlraum umfasst.

Es ist bevorzugt, dass Schritt c) das Einleiten des unter Überdruck stehenden Kühlfluids in den Hohlraum durch eine endständige Öffnung der Versteifungshohlprofile und/oder durch eine oder mehrere Öffnungen in einem Steg der geschlossenen Omega-Stringer, insbesondere durch ein Einlassventil, umfasst.

Es ist bevorzugt, dass Schritt c) das Kühlen des von außerhalb des gasdichten Behälters zugeführten Kühlfluids mit einer Fluidkühleinheit C innerhalb des gasdichten Behälters umfasst.

Es ist bevorzugt, dass Schritt c) das Einleiten von unter Überdruck stehendem Kühlfluid in dem gegebenenfalls zwischen den Kavitäten und den in die Kavitäten abgelegten Versteifungshohlprofilen vorhandenen Spalt umfasst.

Es ist bevorzugt, dass Schritt d) das Abkühlen der Anordnung durch Abkühlenlassen an der Umgebungsluft umfasst.

Es ist bevorzugt, dass Schritt d) das Abkühlen der Anordnung durch aktives Kühlen mit einem Kühlmedium umfasst.

Es ist bevorzugt, dass Schritt d) das Abkühlen durch aktives Kühlen und/oder Abkühlenlassen der Anordnung unter Wahrung des in dem gasdichten Behälter herrschenden Fügedrucks, bis die Temperatur der Anordnung unter der für den Stoffschluss erforderlichen Temperatur, besonders unter der Dauergebrauchstemperatur, vorzugsweise unter der Wärmeformbeständigkeitstemperatur, besonders bevorzugt unter der Glasübergangstemperatur des thermoplastischen Verbundwerkstoffs liegt, umfasst.

Es ist bevorzugt, dass die Versteifungshohlprofile in den Kavitäten des Formwerkzeugs durch ein Kühlmedium gekühlt werden, das durch die in dem Formwerkzeug angrenzend an die Kavitäten ausgebildete Versteifungshohlprofil-Kühleinheit strömt.

Es ist bevorzugt, dass auf der Anordnung aus Versteifungshohlprofilen und flächigem Bauteil eine Vakuumfolie abgelegt wird und anschließend ein Vakuum zwischen der Vakuumfolie und der Oberfläche des Formwerkzeugs und/oder der Oberfläche des flächigen Bauteils und/oder der Oberfläche der Versteifungshohlprofile erzeugt wird.

Es ist bevorzugt, dass auf der Anordnung aus Versteifungshohlprofilen und flächigem Bauteil eine Vakuumfolie abgelegt wird und anschließend ein Vakuum zwischen der Vakuumfolie und der Oberfläche des Formwerkzeugs und/oder der Oberfläche des flächigen Bauteils und/oder der Oberfläche der Versteifungshohlprofile erzeugt wird.

Gemäß einem weiteren Aspekt schafft die Erfindung eine Vorrichtung zum Durchführen des weiter oben beschriebenen Verfahrens oder zum Herstellen des weiter oben beschriebenen versteiften flächigen Bauteils, die umfasst:
a) ein Formwerkzeug, insbesondere männliches Formwerkzeug oder weibliches Formwerkzeug mit einer Oberfläche zum Anordnen von Versteifungshohlprofilen und eines flächigen Bauteils, die einen thermoplastischen Verbundwerkstoff enthalten;
b) ein Formwerkzeug, das mit einer Heizvorrichtung zum Beheizen der Anordnung aus Versteifungshohlprofilen und flächigem Bauteil ausgestattet ist;
c) einen gasdichten Behälter zum Erhitzen der Anordnung aus Versteifungshohlprofilen und flächigem Bauteil unter Überdruck;
d) Kühleinrichtungen zum Kühlen der Versteifungshohlprofile, die umfassen:
   - eine Leitung innerhalb des männlichen Formwerkzeugs, die den Innenraum des gasdichten Behälters mit dem Hohlraum in den Versteifungshohlprofilen verbindet, die mit einem Fluidkühlsystem, insbesondere Fluidkühlleitungen, ausgestattet ist, zum Einleiten und Kühlen von Heizfluid und Weiterleiten des gebildeten Kühlfluids in den Hohlraum der Versteifungshohlprofile; und/oder
   - eine Leitung, die aus dem gasdichten Behälter herausführt, die mit einem Fluidkühlsystem, insbesondere Fluidkühlkanäle, ausgestattet ist, zum Herausleiten und Kühlen von Heizfluid, und eine Rückleitung in den gasdichten Behälter zum Einleiten des gebildeten Kühlfluids in den Hohlraum in den Versteifungshohlprofilen; und/oder
   - eine externe Druckerzeugungsvorrichtung zum Bereitstellen von unter Überdruck stehendem Kühlfluid außerhalb des gasdichten Behälters und Leitungen zum Einleiten des erzeugten Kühlfluids in den Hohlraum der Versteifungshohlprofil
   - eine Fluidkühleinheit C innerhalb des gasdichten Behälters zum Kühlen des durch die Fluidleitung B bzw. die Fluidleitung C zugeführten Kühlfluids (40).

Es ist bevorzugt, dass das Formwerkzeug Kavitäten zur Aufnahme der Versteifungshohlprofile aufweist, wobei gegebenenfalls angrenzend an die Kavitäten eine Kühleinheit zum Kühlen der Versteifungshohlprofile mit einem Kühlfluid ausgebildet ist.

Im Folgenden werden Ausführungsbeispiele anhand der beigefügten Zeichnungen näher erläutert. Darin zeigt:
- Fig. 1: schematisch die Herstellung eines Versteifungshohlprofils in einer Querschnittsdarstellung;
- Fig. 2: eine Vorrichtung zur Durchführung des erfindungsgemäßen Verfahrens unter Verwendung eines männlichen Formwerkzeugs;
- Fig. 3: eine Ausschnittvergrößerung der Vorrichtung gemäß Fig. 2 zur Veranschaulichung der Kühlung der Versteifungshohlprofile;
- Fig. 4: eine Vorrichtung zur Durchführung des erfindungsgemäßen Verfahrens unter Verwendung eines weiblichen Formwerkzeugs;
- Fig. 5: eine Ausschnittvergrößerung der Vorrichtung gemäß Fig. 4 zur Veranschaulichung der Kühlung der Versteifungshohlprofile;
- Fig. 6: die Anbindung einer Leitung mit unter Druck stehendem Kühlfluid an ein Versteifungshohlprofil.

Im Folgenden wird die Herstellung eines versteiften flächigen Bauteils 12 aus einem flächigen Bauteil 32 und Versteifungshohlprofilen 10 beschrieben. Beispielhaft betrifft das dargestellte Verfahren die Herstellung einer Rumpfschale 12 aus einer Außenhaut 34 und geschlossenen Omega-Stringern 23. Alle Bauteile bestehen beispielsweise aus einem thermoplastischen Verbundwerkstoff aus Polyetheretherketon (PEEK) mit einer Schmelztemperatur etwa 340 °C und Kohlenstofffasern.

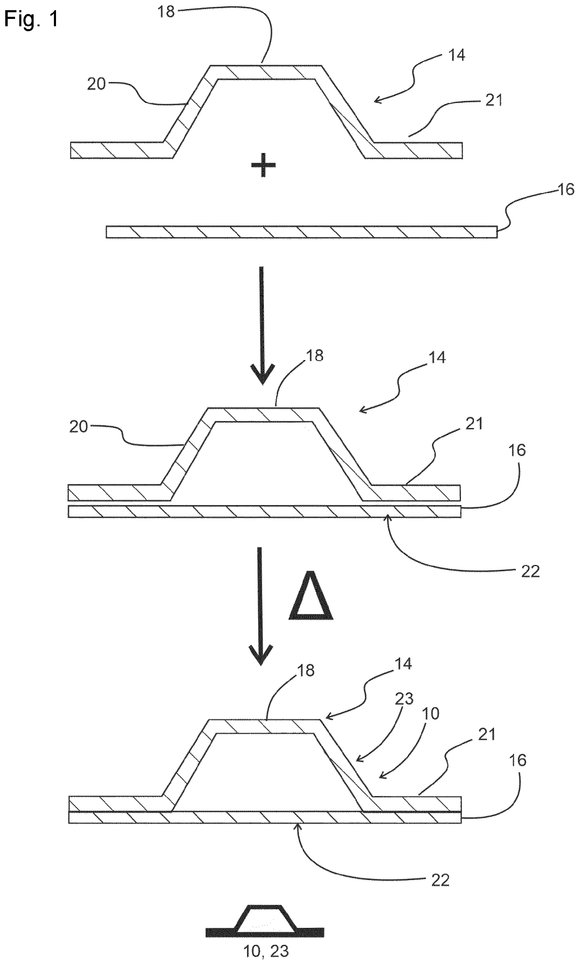

Fig. 1 zeigt schematisch in einer Querschnittsdarstellung den Aufbau und die Herstellung eines geschlossenen Omega-Stringers 23. Der geschlossene Omega-Stringer 23 umfasst einen Omega-Stringer 14, der eine Kappe 18, zwei Stege 20 und zwei Füße 21 aufweist, und eine den Omega-Stringer 14 an seinen Füßen 21 verschließende Abdecklage 16.

Die Abdecklage 16 und die beiden Füße 21 des Omega-Stringers 14 werden miteinander in Kontakt gebracht und beispielsweise durch Erhitzen mindestens der Kontaktflächen zwischen den Füßen 21 und Abdecklage 16 stoffschlüssig miteinander verbunden. Es wird ein geschlossener Omega-Stringer 23 erhalten, der bei verschlossenen Stringer-Enden luftdicht ist und unter Überdruck gesetzt werden kann.

Die Abdecklage 16 bildet die Versteifungshohlprofilwand 22 des geschlossenen Omega-Stringers 23, die zur Herstellung der Rumpfschale mit der Außenhaut 34 in flächigen Kontakt gebracht und dann stoffschlüssig verbunden wird.

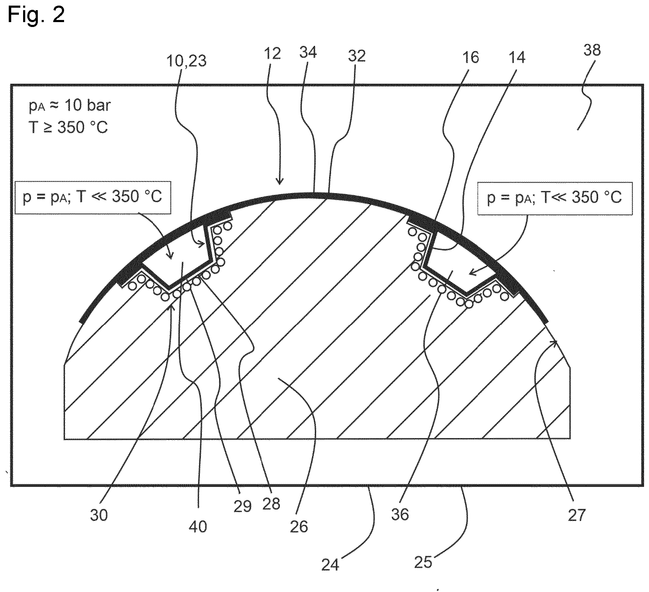

Fig. 2 veranschaulicht ein Ausführungsbeispiel für die Durchführung des Verfahrens zum Herstellen einer Rumpfschale aus einer Außenhaut 34 und geschlossene Omega-Stringers 23 in einer Vorrichtung mit männlichem Formwerkzeug 26.

Das männlichen Formwerkzeug 26 weist Kavitäten 28 zum Positionieren der geschlossenen Omega-Stringer 23 auf.

Unter den Kavitäten 28 ist hier beispielhaft eine Versteifungshohlprofil-Kühleinheit 30 zum zusätzlichen Kühlen der geschlossenen Omega-Stringer 23 angeordnet, die beispielsweise Kühlleitungen mit einem hindurchströmenden Kühlmedium umfasst.

Die Kavitäten 28 können aber auch eine Isolierung, beispielsweise in Form einer Polytetrafluorethylen- oder Keramikbeschichtung, aufweisen, die den gekühlten Hohlraum 36 und die gekühlten Kavitäten 28 vom übrigen erhitzten männlichen Formwerkzeug 26 thermisch isolieren.

Die geschlossenen Omega-Stringer 23 werden in den Kavitäten 28 positioniert, wobei die Oberfläche der Abdecklage 16 der geschlossenen Omega-Stringer 23 in etwa bündig mit der konvexen Oberfläche 27 des männlichen Formwerkzeugs 26 abschließt. Die Zeichnung ist nicht maßstabsgetreu und zeigt die geschlossenen Omega-Stringer 23 in vergrößerter Darstellung. Auf der konvexen Oberfläche 27 des männlichen Formwerkzeugs 26 wird eine Außenhaut 34 so abgelegt, dass sich die Oberfläche der Abdecklage 16 an die Oberfläche der Außenhaut 34 im flächigen Kontakt anschmiegt. Die Außenhaut 34 kann konsolidiert oder nicht konsolidiert sein.

Anschließend wird die Anordnung aus geschlossenen Omega-Stringern 23 und Außenhaut 34 in einem gasdichten Behälter 24 mit Heizvorrichtung, wie einem Autoklav 25, erhitzt. Der Autoklav 25 steht unter einem Überdruck p von beispielsweise etwa 2 bis 40 bar, hier beispielhaft etwa 10 bar. Das Heizfluid 38 im Innenraum des Autoklavs 25 ist beispielsweise erhitzte, unter Überdruck stehende Luft und hat eine Temperatur von beispielsweise ≥ 350 °C. Die Temperatur kann also etwa 10 °C über der Schmelztemperatur von PEEK oder darüber liegen.

Vorteilhaft wird das Verfahren so temperaturgesteuert, dass nur die Außenhaut 34 und die der Außenhaut 34 zugewandte Seite der Stringer-Füße 21 oder der Abdecklage 16 der geschlossenen Omega-Stringer 23 über die Schmelztemperatur von PEEK erhitzt werden. Dieses Prinzip findet auch bei anderen Thermoplasten Anwendung. Um die übrigen Abschnitte der geschlossenen Omega-Stringer 23 vor einem die Stringer-Form destabilisierenden Schmelzen zu schützen, strömt ein Kühlfluid 40 durch den langgestreckten Hohlraum 36 in den geschlossenen Omega-Stringern 23, das die geschlossenen Omega-Stringer 23 von innen kühlt.

Das Kühlfluid 40 hat eine Temperatur unter der Schmelztemperatur von PEEK, vorzugsweise deutlich unter der Schmelztemperatur, beispielsweise unter der Dauergebrauchstemperatur, unter der Wärmeformbeständigkeitstemperatur oder unter der Glasübergangstemperatur von PEEK. Seine Temperatur liegt deutlich unter 350 °C (T << 350 °C) und kann insbesondere mindestens 50 °C und noch deutlicher unter der Schmelztemperatur von PEEK liegen. Das Kühlfluid 40 in dem Hohlraum 36 steht unter einem Druck von beispielsweise etwa 10 bar und besteht hier ebenfalls aus unter Druck stehender Luft. Das Kühlfluid 40 wird innerhalb und/oder außerhalb des Autoklavs 25 erzeugt, beispielsweise aus dem Heizfluid 38. Einzelheiten zu Herstellung und Einleitung des Kühlfluids 40 werden in Fig. 3 veranschaulicht.

Als weiterer Schutz vor einem Schmelzen bestimmter Bauteil-Abschnitte können die geschlossenen Omega-Stringer 23 außerdem von außen durch ein Kühlmedium gekühlt werden, das durch die Versteifungshohlprofil-Kühleinheit 30 in dem männlichen Formwerkzeug 26 strömt.

Zwischen den Kavitäten 28 und den geschlossenen Omega-Stringern 23 kann es zur Ausbildung eines Spalts 29 kommen. Dieser Spalt 29 wird gegebenenfalls ebenfalls mit dem gleichen Überdruck wie der Innenraum des Autoklavs 25 beaufschlagt. Er kann weiterhin mit unter Überdruck stehendem Kühlmedium gefüllt werden. Er kann aber auch unter Vakuum gesetzt werden.

Zusammenfassend zielen die gewählten Fluidtemperaturen von Heizfluid 38 und Kühlfluid 38 darauf ab, dass die Außenhaut 34 und möglichst nur die Stringer-Fuß-Seite oder die Abdecklagenseite, die in Richtung der Außenhaut 34 orientiert ist, durch das Heizfluid 38 auf eine Temperatur über der Schmelztemperatur von PEEK erhitzt werden. PEEK erweicht oder schmilzt an der Kontaktfläche zwischen Außenhaut 34 und Stringer-Fuß-Seite oder äußerer Abdecklagenseite. Beim Abkühlen entsteht eine mechanisch stabile, vorzugsweise stoffschlüssige Verbindung zwischen der Außenhaut 34 und dem geschlossenen Omega-Stringer 23. Eine nicht konsolidierte Außenhaut 34 wird unter den gewählten Druck- und Temperaturbedingungen konsolidiert. Die geschossenen Omega-Stringer 23 und Außenhaut 34 werden co-konsolidiert. Der unter Druck stehende Stringer ist luftdicht und stabil. In dem Stringer befindet sich kein Schlauch

Das Kühlfluid 40 in dem Hohlraum 36 des geschlossenen Omega-Stringers 23 und gegebenenfalls das Kühlmedium in der Versteifungshohlprofil-Kühleinheit 30 sorgen dafür, dass die geschlossenen Omega-Stringer 23 mindestens im Bereich der Stringer-Kappe 18 und der Stringer-Stege 20 bei einer Temperatur unter der Schmelztemperatur von PEEK gehalten werden. Die geschlossenen Omega-Stringer 23 erweichen nicht und bleiben formstabil. Das Einlegen von Stützelementen, wie eines harten oder eines semiharten Kerns, in den Hohlraum 36 der geschlossenen Omega-Stringer 23 ist zur Stabilisierung der geschlossenen Omega-Stringer 14 nicht erforderlich. Ein aufwändiges Entfernen derartiger Stützelemente entfällt ebenfalls.

Fig. 3 zeigt eine Ausschnittvergrößerung der Vorrichtung von Fig. 2. Sie veranschaulicht Verfahren A, B und C zum Kühlen der geschlossenen Omega-Stringer 23.

Für das Verfahren A ist in dem männlichen Formwerkzeug 26 eine Fluidleitung A, 44 ausgebildet, die den Innenraum des Autoklavs 25 mit dem Hohlraum 36 in den geschlossenen Omega-Stringern 23 verbindet. Die Fluidleitung-A 44 ist mit einer Fluidkühleinheit A, 46, beispielsweise aus Kühlkanälen oder Kühlleitungen, ausgestattet, die das einströmende Heizfluid 38 abkühlt. Das gebildete Kühlfluid 40 wird in den Hohlraum 36 der geschlossenen Omega-Stringer 23 eingeleitet. Es steht unter dem gleichen Druck von beispielsweise etwa 10 bar wie das Heizfluid 38, weist aber eine niedrigere Temperatur von T << 350 °C auf.

Beim Verfahren B strömt Heizfluid 38 durch eine Fluidleitung B, 48 aus dem gasdichten Autoklav 25 heraus. Außerhalb des Autoklavs 25 weist die Fluidleitung B, 48 eine Fluidkühleinheit B, 50 zum Kühlen des Heizfluids 38 auf. Das erzeugte Kühlfluid 40 wird durch die Fluidleitung B, 48 in den Hohlraum 36 in den geschlossenen Omega-Stringern 23 eingeleitet. Es steht unter dem gleichen Druck von etwa 10 bar wie das Heizfluid 38, weist aber eine niedrigere Temperatur von T << 350 °C auf.

Beim Verfahren C wird das unter Druck stehende Kühlfluid 40 separat vom Heizfluid 38 gebildet. Es wird außerhalb des Autoklavs 25 in einem separaten Druckerzeugungssystem erzeugt und durch die Fluidleitung C, 52 in den Hohlraum 36 in den geschlossenen Omega-Stringern 23 geleitet. Das Kühlfluid 40 wird durch eine in der Fluidleitung C, 52 integrierte Pumpe 54 gefördert oder gebildet. Der Druck des Kühlfluids 40 entspricht in etwa dem Druck des Heizfluids 38.

Fig. 3 zeigt eine Kombination der Verfahren A, B und C. Es ist aber auch möglich, nur die Verfahren A und B oder A und C oder B und C zu kombinieren oder ausschließlich das Verfahren A oder das Verfahren B oder das Verfahren C durchzuführen, um das Kühlfluid 40 für den Hohlraum 36 bereitzustellen.

Das unter Überdruck stehende Kühlfluid 40 wird durch eine Öffnung am Ende der Versteifungshohlprofile 10, 23 oder eine oder mehrere Öffnungen in einer Oberfläche der Versteifungshohlprofile 10, 23, insbesondere in einem Steg 20, in den Hohlraum 36 eingeleitet. Das Versteifungshohlprofil 10, 23 kann für das Einleiten ein fest montiertes Ventil oder ein lösbar befestigtes Ventil aufweisen. Hierfür können zum Beispiel die Stringer-Abflusslöcher verwendet werden. Nach Durchströmen des Hohlraums 36 wird das Kühlfluid 40 beispielsweise an einer Auslassöffnung 68 in den Innenraum des Autoklavs 25 abgegeben.

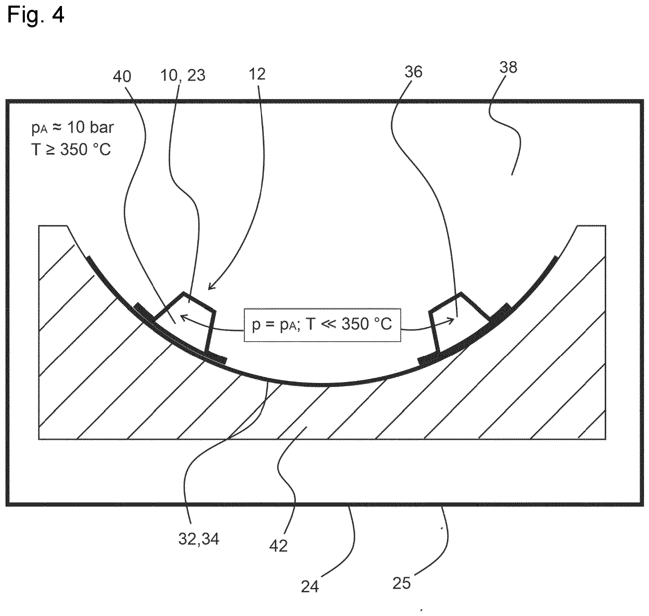

Fig. 4 veranschaulicht die Durchführung des erfindungsgemäßen Verfahrens zum Herstellen einer Rumpfschale 12 aus einer Außenhaut 34 als Beispiel für ein flächiges Bauteil 32 und geschlossenen Omega-Stringern 23 als Beispiel für Versteifungshohlprofile 10 in einer Vorrichtung mit einem weiblichen Formwerkzeug 26.

Die Außenhaut 34 wird auf der konkaven Oberfläche des weiblichen Formwerkzeugs 42 abgelegt. Darauf werden die geschlossenen Omega-Stringer 23 positioniert. Die Bauteile bestehen aus einem thermoplastischem Verbundwerkstoff aus einer PEEK-Matrix mit eingebetteten Kohlenstofffasern. Das Verfahren mit weiblichem Formwerkzeug stimmt in verschiedenen Aspekten mit dem Verfahren mit männlichem Formwerkzeug 26 überein. Insoweit wird auf die Beschreibung des Verfahrens gemäß Fig. 2 verwiesen.

Im Unterschied zu diesem Verfahren weist das weibliche Formwerkzeug 42 keine Kavitäten 28 und keine Versteifungshohlprofil-Kühleinheit 30, die die Kühlung der geschlossenen Omega-Stringer 23 unterstützt. Damit die geschlossenen Omega-Stringer 23 formstabil bleiben, kann der Hohlraum 36 in den geschlossenen Omega-Stringern 23 stärker gekühlt werden. Die Kühlung im Hohlraum 36 kann dazu führen, dass die Abdecklage 16 verstärkt im Randbereich bei den Stringer-Füßen 21 schmilzt und einen stoffschlüssigen Verbund mit den Stringer-Füßen 21 bildet, weil dieser Bereich im direkten Kontakt mit dem Heizfluid 38 im Autoklav 25 steht.

Das weibliche Formwerkzeug 42 kann eine Heizeinrichtung (nicht dargestellt) aufweisen, die bevorzugt in der Nähe der konkaven Oberfläche des Formwerkzeugs 42 angeordnet ist und die für das Erhitzen der auf der konkaven Oberfläche abgelegten Außenhaut 34 und geschlossenen Omega-Stringer 23 vorgesehen ist. In diesem Fall kann die für die stoffschlüssige Verbindung erforderliche Heizleistung von der Heizeinrichtung im Formwerkzeug 42 erbracht werden oder mit der Heizleistung eines Heizfluids 38 in dem gasdichten Behälter 24, 25 kombiniert werden.

Fig. 5 zeigt eine Ausschnittvergrößerung der Vorrichtung mit weiblichem Formwerkzeug 42 aus Fig. 4, mit der Verfahren B und C zum Kühlen der geschlossenen Omega-Stringer 23 veranschaulicht werden. Die hier dargestellten Verfahren B und C entsprechen im Wesentlichen den Verfahren B und C, die mit dem männlichem Formwerkzeug 26 durchgeführt werden (siehe Fig. 3). Abweichend davon verlaufen die Fluidleitungen B, 48 und C, 50 auch innerhalb des Autoklavs 25 außerhalb des Formwerkzeugs 42.

Das bei den Verfahren B und C von außerhalb in den Autoklav 25 zugeführte Kühlmedium kann wie Fig. 5 zeigt durch eine weitere Fluidkühleinheit C, 56 innerhalb des Autoklavs 25 weiter gekühlt werden. Eine derartige Kühleinheit C, 56 kann auch bei der in Fig. 3 gezeigten Vorrichtung mit männlichem Formwerkzeug 26 vorgesehen werden (nicht dargestellt).

Die Kühlverfahren B und C können miteinander kombiniert werden. Sie können aber auch einzeln und unabhängig voneinander durchgeführt werden.

Das unter Überdruck stehende Kühlfluid 40 wird durch eine Öffnung am Ende der Versteifungshohlprofile 10, 23 oder eine oder mehrere Öffnungen in einer Oberfläche der Versteifungshohlprofile 10, 23, insbesondere in einem Steg 20, in den Hohlraum 36 eingeleitet. Das Versteifungshohlprofil 10, 23 kann für das Einleiten ein fest montiertes Ventil oder ein lösbar befestigtes Ventil aufweisen. Hierfür können zum Beispiel die Stringer-Abflusslöcher verwendet werden. Nach Durchströmen des Hohlraums 36 wird das Kühlfluid 40 beispielsweise an einer Auslassöffnung 68 in den Innenraum des Autoklavs 25 abgegeben.

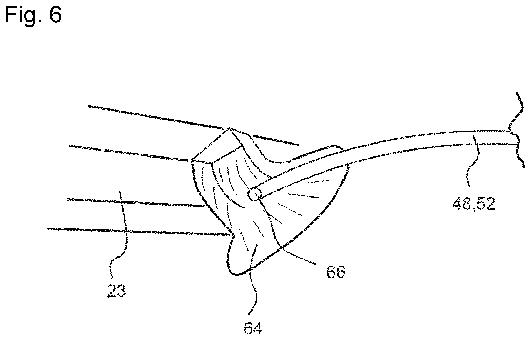

Fig. 6 veranschaulicht die Anbindung eines Schlauches oder eines Rohrs mit dem unter Druck stehendem Kühlfluid 40 an einen geschlossenen Omega-Stringer 23 im Wesentlichen für das Verfahren mit weiblichem Formwerkzeug 42. Bei dem Schlauch oder Rohr kann es sich um einen Endabschnitt der Fluidleitung B, 48 oder der Fluidleitung C 52 handeln. Am Ende des geschlossenen Omega-Stringers 23 ist eine Verschlusskappe 64 in den Stringer 23 eingesetzt. Die Verschlusskappe 64 wird vor der Konsolidierung montiert. Sie kann vor der Stringer-Integration an dem Stringer montiert werden. Sie ist mit einem Einlassventil 66 kombiniert.

Das Stringer-Ende kann mit einem Stringer-Auslauf aus CFK versehen werden, der in dem Stringer verbleibt. Das CFK-Material kann höherschmelzend als das CFK-Material des Stringers 23 sein. Bei besonders kräftigem Kühlen kann das gleiche Matrixsystem verwendet werden. Dieser Stringer-Auslauf kann als Niete zur Anbindung des Stringers an der Außenhaut ausgebildet sein. Damit können andere Nieten zur Befestigung des Stringer-Endes weggelassen werden. Die Auslaufkappe kann hierfür größer und aus einem steiferen Material hergestellt werden.

Im Folgenden werden verschiedene Aspekte der Erfindung zusammengefasst.

Prinzipiell ermöglicht ein Autoklav zusammen mit der Hülse/dem Schlauch innerhalb des Stringers, die/der mit dem Autoklav-Druck in Verbindung steht, eine Konsolidierung. Dies ist aber weiterhin mit einigem Aufwand hinsichtlich der Werkzeugausstattung verbunden (stabilisieren des geschmolzenen Omega-Stringers). Außerdem sind die Hülsen/Schläuche ziemlich teuer. Das Verfahren gemäß Stand der Technik ist also mit einem hohen Aufwand verbunden.

Die Erfindung besteht darin, einen thermoplastischen Omega-Stringer auf eine thermoplastische Haut zu integrieren (für eine Hochtemperaturmatrix, wie z.B. PEKK/PEEK) mit einem Autoklav-Verfahren ohne große Anstrengungen hinsichtlich der Ausstattung des Werkzeugs und ohne Verwendung einer Hülse oder eines Schlauchs, wobei dennoch ein Innendruck innerhalb des hohlen Omega-Profils aufrechterhalten wird. Hierfür soll das Omega-Profil in einer geschlossenen Form (Abdecklage über beiden Füßen) hergestellt werden und nicht vollständig erhitzt werden (gekühlt werden).

Das Ende des Stringers ermöglicht das Eintreten des im Autoklav herrschenden Drucks in das Hohlprofil.

Das Ende des Profils kann auch so gestaltet sein, dass er wie ein redundantes Niet-Element wirkt; ein DT-Merkmal, das das vollständige Ablösen des Stringers im Fall einer Beschädigung verhindert, wenn auf den Endbereich des Stringers eine Belastungsspitze einwirkt.

Der Druck, der in das Hohlprofil eintritt, muss nicht vom einem Autoklav stammen; er kann auch von einem separaten Druckerzeugungssystem herrühren. Es könnte sich auch um ein Kühlmedium handeln.

Fig. 2 und Fig. 3 zeigen einen Autoklav mit einem männlichen Formwerkzeug. Die vorab konsolidierten thermoplastischen geschlossenen Stringer-Profile werden in dem männlichen Formwerkzeug angeordnet. Der Stringer weist eine Fußabdecklage auf, die beide Stringer-Füße abdeckt oder überdeckt. Diese Lage verschließt den Stringer vollständig und macht ihn zu einem geschlossenen, luftdichten Stringer. Dieser Stringer kannte jetzt innen unter Druck gesetzt werden, ohne dass ein Schlauch oder eine Hülse eingesetzt wird, wie dies bei den Verfahren gemäß dem Stand der Technik erforderlich ist. Dies bringt die folgenden Vorteile mit sich:
- niedrigere Kosten, da kein Schlauch eingesetzt werden muss;
- Schläuche für Hochtemperatur-thermoplastische Materialien sind teuer;
- nach der Herstellung Herausziehen eines Schlauches nicht erforderlich.

Die thermoplastische Außenhaut wird über den Stringern angeordnet. Sie kann konsolidiert oder nicht konsolidiert sein.

Das Innere des geschlossenen Stringers, z. B. geschlossenen Omega-Stringers, kann unter Druck gesetzt werden, vorzugsweise mit kühlerer Druckluft (Temperatur beispielsweise 200 - 250 °C). Die Druckluft in dem Stringer wird durch einen Einlass (z.B. ein Einlassventil) in den Stringer eingeleitet. Für die Erzeugung der kühleren Luft gibt es die folgenden Möglichkeiten (Fig. 3):
A) Verwendung von heißer Luft aus dem Autoklav, die abgekühlt wird, wenn sie in das Werkzeug eintritt;
B) Entnehmen von heißer Luft aus dem Autoklav, Abkühlen der heißen Luft außerhalb des Autoklavs und Zurückführen der abgekühlten Luft mit einem gekühlten oder isolierten Schlauch/Rohr in den hohlen Stringer;
C) Verwenden einer Pumpe außerhalb des Autoklavs oder eines Druckluftreservoirs außerhalb des Autoklavs mit gekühlter Luft, um den Stringer mit Druck zu beaufschlagen.

Diese Kühlverfahren gemäß A bis C können auch miteinander kombiniert werden. Im Fall eines männlichen Formwerkzeugs ist es weiterhin vorteilhaft möglich, das den Stringer umgebende Werkzeug zu kühlen.

Wenn in dem Stringer der gleiche Druck wie in dem Autoklav herrscht, er aber auf eine Temperatur deutlich unterhalb des Schmelzpunkts gekühlt wird, kann er stabil und luftdicht bleiben.

Nur die Haut und die Seite des Stringer-Fußes, die in Richtung der Haut orientiert ist, werden auf eine Temperatur über dem Schmelzpunkt erhitzt (z.B. 350-400 °C für PEEK oder PEKK). Dadurch wird die Haut konsolidiert, und der Stringer wird durch Co-Konsolidieren an die Haut integriert. Beim Entformen muss kein Schlauch entfernt werden.

Aufgrund des guten Drucks innerhalb des Stringer-Profils kann der Stringer-Fuß exakt der beabsichtigten Loft-Form des Luftfahrzeugs folgen. In dem Verfahren mit männlichem Formwerkzeug kann ein Pressblech außen auf der Haut verwendet werden, um die Qualität der äußeren Loft-Oberfläche zu verbessern.

In Fig. 4 und Fig. 5 wird das Konzept für ein weibliches Werkzeug gezeigt. Bei diesem Verfahren wird das gleiche Prinzip wie bei dem für das männliche Werkzeug gezeigten Verfahren angewendet, es stellt aber eine größere Herausforderung dar, da eine Lösung für das folgende Problem gefunden werden muss:
Der Stringer muss stabil bleiben (gutes Kühlen ist erforderlich), da er von dem Werkzeug weder unterstützt noch gekühlt wird; zusätzliche Werkzeugblöcke sind möglich, die würden aber einen größeren Aufwand bedeuten; ein stärkeres Kühlen des Stringers kann helfen;
Allgemein kann die Stringerfuß-Abdecklage zu einer leichten Erhöhung des Gewichts führen, da diese Abdecklage normalerweise nicht benötigt wird. Die Auswirkungen des Gewichts können aber abgemildert werden, da der dickere Stringerfuß das Risiko eines Knickens der Haut unter dem Stringerkopf verringert und die Knickbeständigkeit erhöht wird. Eventuell kann die Stringer-Neigung leicht erhöht werden.

Fig. 6 zeigt die Option im Wesentlichen für das Verfahren mit weiblichem Formwerkzeug für das Kombinieren des Druckeinlasses mit
1) einer Verschlusskappe kombiniert mit einem Einlassventil als Teil der Werkzeugausstattung; die Kappe wird vor der Konsolidierung montiert und mit dem Druckgasschlauch verbunden. Sie könnte auch eine zusätzliche Kühlmöglichkeit enthalten, sie könnte zum Beispiel vor der Stringer-Integration an den Stringer montiert werden und grob den Vakuum-Film nach einem ähnlichen Prinzip anbinden, wie dies für den A350 gemacht wird, aber ohne Schlauch in dem Stringer;
2) einem Stringer-Auslauf aus CFK: Vorsehen eines CFK-Elements, das in dem Strukturteil verbleibt. Durch Verwendung eines höher schmelzenden, kompatiblen thermoplastischen Materials (z.B. mit einer Grenzschicht); bei einem angemessenen Kühlen kann es sich um das gleiche Matrixsystem handeln. Dieses Stringer-Auslauf-Bauteil kann für die Funktion einer "redundanten Niete" sorgen. Es kann das Weglassen von Nieten ermöglichen, die dazu verwendet werden, das Ablösen des Stringers beim Stringer-Auslauf zu vermeiden. Dies kann durch eine größere Breite und eine hinsichtlich der Steifigkeit optimierte Gestaltung der Kappe verwirklicht werden.

Nicht in den Figuren gezeigt: Der Druckluft-Schlauch mit dem der Kühlung dienenden Luftstrom kann auch direkt mit dem Stringer-Steg verbunden werden, mit einem fest montierten Ventil oder einem lösbar befestigten Ventil. Wie z.B. unter Verwendung der Stringer-Abflusslöcher.

Bevorzugte Merkmale für das männliche Formwerkzeug (ohne Figur): Für doppelt gekrümmte Schalen (oder Schalen mit einem größeren Winkel) muss das Entformen berücksichtigt werden. Zusätzliche Werkzeugkerne, die entlang dem Stringer verlaufen, können in Betracht gezogen werden. Der Werkzeugkern kann zusammen mit dem Stringer oder im Vorfeld angeordnet werden. Diese Kerne können das Entformen bei doppelt gekrümmten Flächen und einem Panel mit einer Spanne oder einem Bogen von bis zu 180 ° Bogen ermöglichen. In dem Werkzeugkern kann das Kühlen durchgeführt werden, oder das Werkzeug kann durch die Werkzeuge gehen. Auch wenn die volle Länge überdeckt wird, kann das Werkzeug der "Kühlkanal" sein. Bevorzugte Merkmale für das weibliche Werkzeug (ohne Figur): es können auch unterstützende Werkzeugblöcke außerhalb des Stringers unter der Vakuumfolie vorgesehen werden.

### Bezugszeichenliste:

- 10: Versteifungshohlprofil
- 12: versteiftes flächiges Bauteil
- 14: Omega-Stringer
- 16: Abdecklage
- 18: Stringer-Kappe
- 20: Stringer-Steg
- 21: Stringer-Fuß
- 22: Versteifungshohlprofilwand
- 23: geschlossener Omega-Stringer
- 24: gasdichter Behälter
- 25: Autoklav
- 26: männliches Formwerkzeug
- 27: konvexe Oberfläche des männlichen Formwerkzeugs
- 28: Kavität
- 29: Spalt
- 30: Versteifungshohlprofil-Kühleinheit
- 32: flächiges Bauteil
- 34: Außenhaut
- 36: Hohlraum
- 38: Heizfluid
- 40: Kühlfluid
- 42: weibliches Formwerkzeug
- 44: Fluidleitung A
- 46: Fluidkühleinheit A
- 48: Fluidleitung B
- 50: Fluidkühleinheit B
- 52: Fluidleitung C
- 54: Pumpe
- 56: Fluidkühleinheit C
- 64: Omega-Stringer-Verschlusskappe
- 66: Einlassventil
- 68: Auslassöffnung

## Patentansprüche

1. Verfahren zum Herstellen eines versteiften flächigen Bauteils (12) auf Polymerbasis insbesondere zur Verwendung im Luftfahrzeugbau umfassend ein flächiges Bauteil (32, 34) auf Polymerbasis und daran befestigte Versteifungsprofile (10, 23) auf Polymerbasis, das mindestens folgende Schritte umfasst:
a) Bereitstellen von Versteifungshohlprofilen (10, 23), die thermoplastischen Verbundwerkstoff umfassen, eines flächigen Bauteils (32, 34), das thermoplastischen Verbundwerkstoff umfasst, eines Formwerkzeugs (26, 42) und eines gasdichten Behälters (24, 25);
b) Anordnen der Versteifungshohlprofile (10, 23) und des flächigen Bauteils (32, 34) auf der Oberfläche des Formwerkzeugs (26, 42) unter flächigem Inkontaktbringen einer Versteifungshohlprofilwand (22) der Versteifungshohlprofile (10, 23) mit dem flächigen Bauteil (32, 34);
**gekennzeichnet durch** die Schritte:
c) Erhitzen der in Schritt b) erhaltenen Anordnung in dem gasdichten Behälter (24, 25) mit einem unter Überdruck stehenden Heizfluid (38), dessen Temperatur oberhalb der Schmelztemperatur des thermoplastischen Verbundwerkstoffs liegt, und/oder in dem mit einem Überdruck beaufschlagten gasdichten Behälter (24, 25) mit einer in dem Formwerkzeug (26, 42) ausgebildeten Heizeinrichtung, die mindestens die Formwerkzeugoberfläche auf eine Temperatur oberhalb der Schmelztemperatur des thermoplastischen Verbundwerkstoffs erhitzt, unter Kühlen der Versteifungshohlprofile (10, 23) mit einem durch den Hohlraum (36) der Versteifungshohlprofile (10, 23) strömenden, unter Überdruck stehenden Kühlfluid (40) mit einer Temperatur unterhalb der Schmelztemperatur des thermoplastischen Verbundwerkstoffs;
d) Abkühlen der Anordnung auf Umgebungstemperatur unter stoffschlüssigem Verbinden der Versteifungshohlprofilwände (22) mit dem flächigen Bauteil (32, 34).

2. Verfahren nach Anspruch 1,
**dadurch gekennzeichnet, dass** die Versteifungshohlprofile (10, 23) geschlossene Omega-Stringer (23) sind, die einen Omega-Stringer (14) mit Stringer-Kappe (18), Stringer-Stegen (20) und Stringer-Füßen (21) und eine mit den Stringer-Füßen (21) verbundene, insbesondere stoffschlüssig verbundene Abdecklage (16) oder eine die Stringer-Füße (21) bildende Abdecklage umfassen, wobei die Abdecklage (16) oder die Stringer-Füße (21) die Versteifungshohlprofilwand (22) bilden, die für den flächigen Kontakt mit dem flächigen Bauteil (32, 34) vorgesehen ist.

3. Verfahren nach einem der Ansprüche 1 und 2,
**dadurch gekennzeichnet, dass** Schritt a) einen, mehrere oder alle der folgenden Schritte umfasst:
a1) Bereitstellen von Versteifungshohlprofilen (10, 23) und/oder eines flächigen Bauteils (32, 34), die einen thermoplastischen Verbundwerkstoff umfassen, der umfasst:
- ein oder mehrere thermoplastische Polymere als Matrixmaterial, die unter Hochtemperatur-thermoplastischen Polymeren, Hochleistungskunststoffen, teilkristallinen Hochleistungskunststoffen, Polyaryletherketonen, wie Polyetherketonketon, Polyetherketon, Polyetheretherketonen, Polyetheretheretherketon, Polyetheretherketonketon und Polyetherketon-etherketonketon, ausgewählt werden, und
- ein Verstärkungsmaterial, vorzugsweise synthetische Fasern, besonders bevorzugt Kohlenstofffasern, das/die in das Matrixmaterial eingebettet ist/sind; und/oder
a2) Bereitstellen eines Formwerkzeugs (26, 42), insbesondere männlichen Formwerkzeugs (26) mit Kavitäten (28) zum Aufnehmen der Versteifungshohlprofile (10, 23); und/oder
a3) Bereitstellen eines Formwerkzeugs (26), insbesondere männlichen Formwerkzeugs (26), mit Kavitäten (28) zum Aufnehmen der Versteifungshohlprofile (10, 23) und mit einer Versteifungshohlprofil-Kühleinheit (30), die benachbart zu den Kavitäten (28) im Formwerkzeug (26) ausgebildet ist; und/oder
a4) Bereitstellen eines männlichen Formwerkzeugs (26) mit einem konvex geformten Oberflächenbereich zum Ablegen des flächigen Bauteils (32, 34); und/oder
a5) Bereitstellen eines weiblichen Formwerkzeugs (42) mit einem konkav geformten Oberflächenbereich zum Ablegen des flächigen Bauteils (32, 34); und/oder
a6) Bereitstellen eines Formwerkzeugs (26, 42), insbesondere weiblichen Formwerkzeugs (42), mit einer Heizeinrichtung zum Erhitzen der auf dem Formwerkzeug (26, 42) abgelegten Anordnung aus flächigem Bauteil (32, 34) und Versteifungshohlprofilen (10, 23); und/oder
a7) Bereitstellen eines Autoklavs (25) oder Pressklavs als gasdichter Behälter (24).

4. Verfahren nach einem der vorhergehenden Ansprüche,
**dadurch gekennzeichnet, dass**
Schritt b) einen, mehrere oder alle der folgenden Schritte umfasst:
b1) Anordnen der Versteifungshohlprofile (10, 23) in den Kavitäten (28) des Formwerkzeugs (26) und Ablegen des flächigen Bauteils (32, 34) auf der Oberfläche des Formwerkzeugs (26); und/oder
b2) Anordnen des flächigen Bauteils (32, 34) auf der Oberfläche des Formwerkzeugs (42) und Positionieren der Versteifungshohlprofile (10, 23) auf der Oberfläche des flächigen Bauteils (32, 34); und/oder
b3) Inkontaktbringen der Oberfläche der Abdecklage (16) der geschlossenen Omega-Stringer (23) mit der Oberfläche des flächigen Bauteils (32, 34).

5. Verfahren nach einem der vorhergehenden Ansprüche,
**dadurch gekennzeichnet, dass** Schritt c) einen, mehrere oder alle der folgenden Schritte umfasst:
c1) Verwenden von Luft oder eines inerten Gases als Heizfluid (38) und/oder als Kühlfluid (40); und/oder
c2) Verwenden eines Heizfluids (38) und/oder eines beheizten Formwerkzeugs (26, 42) mit einer Temperatur, die mindestens etwa 10 °C über der Schmelztemperatur des thermoplastischen Verbundwerkstoffs liegt, und/oder eines Kühlfluids (40) mit einer Temperatur, die mindestens etwa 50 °C unter der Schmelztemperatur des thermoplastischen Verbundwerkstoffs liegt; und/oder
c3) Verwenden eines Heizfluids (38) und/oder eines beheizten Formwerkzeugs (26, 42) mit einer Temperatur von etwa 5 °C bis etwa 120 °C, vorzugsweise etwa 10 °C bis etwa 100 °C, noch bevorzugter etwa 10 °C bis etwa 80 °C, besonders bevorzugt etwa 10 °C bis etwa 60 °C über der Schmelztemperatur des thermoplastischen Verbundwerkstoffs und eines Kühlfluids (40) mit einer Temperatur von etwa 50 °C bis etwa 250 °C, vorzugsweise etwa 60 °C bis etwa 180 °C, bevorzugter etwa 70 °C bis etwa 160 °C, besonders bevorzugt etwa 90 °C bis etwa 140 °C unter der Schmelztemperatur des thermoplastischen Verbundwerkstoffs; und/oder
c4) Verwenden eines Heizfluids (38) und/oder eines beheizten Formwerkzeugs (26, 42) in Kombination mit einem Kühlfluid (40), deren Temperatur so gewählt wird, dass das flächige Bauteil (32, 34) und die Versteifungshohlprofilwand (22), insbesondere nur die an das flächige Bauteil (32, 34) angrenzende Seite der Versteifungshohlprofilwand (22), über die Schmelztemperatur des thermoplastischen Verbundwerkstoffs erhitzt werden und die sonstigen Abschnitte der Versteifungshohlprofile (10, 23) bei einer Temperatur unter der Schmelztemperatur des thermoplastischen Verbundwerkstoffs bleiben; und/oder
c5) Verwenden eines Heizfluids (38) und/oder eines beheizten Formwerkzeugs (26, 42) in Kombination mit einem Kühlfluid (40), deren Temperatur so gewählt wird, dass die Versteifungshohlprofilwand (22) und das flächige Bauteil (32, 34) stoffschlüssig miteinander verbindbar sind und/oder die sonstigen Abschnitte der Versteifungshohlprofile (10, 23) formstabil bleiben und/oder die Versteifungshohlprofile (10, 23) luftdicht bleiben.

6. Verfahren nach einem der vorhergehenden Ansprüche,
**dadurch gekennzeichnet, dass** Schritt c) umfasst:
c7) Erzeugen eines Drucks p_{A} im Bereich von etwa 2 bis 40 bar, beispielsweise etwa 8 bis 12 bar, durch Druckerzeugen im gasdichten Behälter (24, 25) und/oder durch ein externes Druckerzeugungssystem; und/oder
c8) Erzeugen eines Überdrucks in den Versteifungshohlprofilen (10, 23), bei dem die Versteifungshohlprofilwand (22) des Versteifungshohlprofils (10, 23) oder die Abdecklage (16) der geschlossenen Omega-Stringer (23) genau der angestrebten Oberflächenform des Luftfahrzeugbauteils folgt; und/oder
c9) Erzeugen eines Überdrucks in dem gegebenenfalls zwischen den Kavitäten (28) und den in die Kavitäten (28) abgelegten Versteifungshohlprofilen (10, 23) vorhandenen Spalt (29).

7. Verfahren nach einem der vorhergehenden Ansprüche,
**dadurch gekennzeichnet, dass** das Kühlen der Versteifungshohlprofile (10, 23) in Schritt c) einen, mehrere oder alle der folgenden Schritte umfasst:
c10) Einleiten von Heizfluid (38) aus dem gasdichten Behälter (24, 25) in eine im männlichen Formwerkzeug (26) ausgebildete Fluidleitung A (44), die mit einer Fluidkühleinheit A (46) zum Kühlen des Heizfluids (38) ausgestattet ist, und Einleiten des gebildeten Kühlfluids (40) in den Hohlraum (36) in den Versteifungshohlprofilen (10, 23);
c11) Herausleiten von Heizfluid (38) aus dem gasdichten Behälter (24, 25) in eine externe Fluidleitung B (48), die mit einer Fluidkühleinheit B (50) zum Kühlen des Heizfluids (38) ausgestattet ist, und Einleiten des gebildeten Kühlfluids (40) in den gasdichten Behälter (24, 25) und nachfolgend den Hohlraum (36) in den Versteifungshohlprofilen (10, 23);
c12) Erzeugen von unter Überdruck stehendem Kühlfluid (40) außerhalb des gasdichten Behälters (24, 25) in einem separaten Druckerzeugungssystem und/oder mit einer Pumpe (54) und Einleiten des Kühlfluids (40) durch eine Fluidleitung C (52) in den gasdichten Behälter (24, 25) und nachfolgend den Hohlraum (36) in den Versteifungshohlprofilen (10, 23); und/oder
c13) Verwenden eines gekühlten oder isolierten Schlauches oder Rohrs für das Einleiten des unter Überdruck stehenden Kühlfluids (40) in den Hohlraum (36) umfasst; und/oder
c14) Einleiten des unter Überdruck stehenden Kühlfluids (40) in den Hohlraum (40) durch eine endständige Öffnung der Versteifungshohlprofile (10, 23) und/oder durch eine oder mehrere Öffnungen in einem Steg (20) der geschlossenen Omega-Stringer (23), insbesondere unter Verwendung eines Einlassventils (60); und/oder
c15) Kühlen des von außerhalb des gasdichten Behälters (24, 25) zugeführten Kühlfluids (40) mit einer Fluidkühleinheit C (56) innerhalb des gasdichten Behälters (24, 25); und/oder
c16) Einleiten von unter Überdruck stehendem Kühlfluid in dem gegebenenfalls zwischen den Kavitäten (28) und den in die Kavitäten (28) abgelegten Versteifungshohlprofilen (10, 23) vorhandenen Spalt (29).

8. Verfahren nach einem der vorhergehenden Ansprüche,
**dadurch gekennzeichnet, dass** Schritt d) einen, mehrere oder alle der folgenden Schritte umfasst:
d1) Abkühlen der Anordnung durch Abkühlenlassen an der Umgebungsluft; und/oder
d2) Abkühlen der Anordnung durch aktives Kühlen mit einem Kühlmedium; und/oder
d3) Abkühlen durch aktives Kühlen und/oder Abkühlenlassen der Anordnung unter Wahrung des in dem gasdichten Behälter (24, 25) herrschenden Fügedrucks, bis die Temperatur der Anordnung unter der für den Stoffschluss erforderlichen Temperatur, besonders unter der Dauergebrauchstemperatur, vorzugsweise unter der Wärmeformbeständigkeitstemperatur, besonders bevorzugt unter der Glasübergangstemperatur des thermoplastischen Verbundwerkstoffs liegt.

9. Verfahren nach einem der vorhergehenden Ansprüche,
**dadurch gekennzeichnet, dass**
die Versteifungshohlprofile (10, 23) in den Kavitäten (28) des Formwerkzeugs (26) durch ein Kühlmedium gekühlt werden, das durch die in dem Formwerkzeug (26) angrenzend an die Kavitäten (28) ausgebildete Versteifungshohlprofil-Kühleinheit (30) strömt.

10. Verfahren nach einem der vorhergehenden Ansprüche,
**dadurch gekennzeichnet, dass**
auf der Anordnung aus Versteifungshohlprofilen (10, 23) und flächigem Bauteil (32, 34) eine Vakuumfolie abgelegt wird und anschließend ein Vakuum zwischen der Vakuumfolie und der Oberfläche des Formwerkzeugs (26, 42) und/oder der Oberfläche des flächigen Bauteils (32, 34) und/oder der Oberfläche der Versteifungshohlprofile (10, 23) erzeugt wird.

11. Vorrichtung zum Durchführen des Verfahrens nach einem der Ansprüche 1 bis 10, die umfasst:
a) ein Formwerkzeug (26, 42), insbesondere männliches Formwerkzeug (26) oder weibliches Formwerkzeug (42), mit einer Oberfläche zum Anordnen von Versteifungshohlprofilen (10, 23) und eines flächigen Bauteils (32, 34), die einen thermoplastischen Verbundwerkstoff umfassen; und/oder
b) ein Formwerkzeug (26, 42), das mit einer Heizvorrichtung zum Beheizen der Anordnung aus Versteifungshohlprofilen (10, 23) und flächigem Bauteil (32, 34) ausgestattet ist;
**gekennzeichnet durch**
c) einen gasdichten Behälter (24) zum Erhitzen der Anordnung aus Versteifungshohlprofilen (10, 23) und flächigem Bauteil (32, 34) unter Überdruck;
d) Kühleinrichtungen zum Kühlen der Versteifungshohlprofile (10, 23), die umfassen:
- eine Fluidleitung A (44) innerhalb des männlichen Formwerkzeugs (26), die den Innenraum des gasdichten Behälters (24, 25) mit dem Hohlraum (36) in den Versteifungshohlprofilen (10, 23) verbindet, die mit einer Fluidkühleinheit A (44) ausgestattet ist, zum Einleiten und Kühlen von Heizfluid (38) und Weiterleiten des gebildeten Kühlfluids (40) in den Hohlraum (36) der Versteifungshohlprofile (10, 23); und/oder
- eine Fluidleitung B (48), die aus dem gasdichten Behälter (24, 25) herausführt, die mit einer Fluidkühleinheit B (50) ausgestattet ist, zum Herausleiten und Kühlen von Heizfluid (38), und eine Rückleitung in den gasdichten Behälter (24, 25) zum Einleiten des gebildeten Kühlfluids (40) in den Hohlraum (36) in den Versteifungshohlprofilen (10, 23); und/oder
- eine externe Druckerzeugungsvorrichtung, wie einer Pumpe (54), zum Bereitstellen von unter Überdruck stehendem Kühlfluid (40) außerhalb des gasdichten Behälters (24, 25) und eine Fluidleitung C zum Einleiten des erzeugten Kühlfluids (40) in den Hohlraum (36) der Versteifungshohlprofile (10, 23); und/oder
- eine Fluidkühleinheit C (56) innerhalb des gasdichten Behälters (24, 25 zum Kühlen des durch die Fluidleitung B (48) bzw. die Fluidleitung C (52) zugeführten Kühlfluids (40).

12. Vorrichtung nach Anspruch 11,
**dadurch gekennzeichnet, dass**
das Formwerkzeug (26) aufweist:
- Kavitäten (28) zur Aufnahme der Versteifungshohlprofile (10, 23)
- Kavitäten (28) zur Aufnahme der Versteifungshohlprofile (10, 23)) mit daran angrenzender, im Formwerkzeug (26) ausgebildeter Kühleinheit (30) zum Kühlen der Versteifungshohlprofile (10, 23) mit einem Kühlfluid (40); und/oder
- Kavitäten (28) zur Aufnahme der Versteifungshohlprofile, deren Oberfläche mit einer Isolierung, wie aus Polytetrafluorethylen oder Keramik; beschichtet ist, zur thermischen Isolierung des Innenraums der Kavitäten (28) von dem Formwerkzeug (26, 42)
- ein Formwerkzeug (26, 42), insbesondere weibliches Formwerkzeug (42); mit einer im Formwerkzeug insbesondere benachbart zur Oberfläche des Formwerkzeugs (26, 42) ausgebildeten Heizeinrichtung zum Erhitzen der Anordnung aus Versteifungshohlprofilen (10, 23) und flächigem Bauteil (32, 34) im Kontaktbereich des flächigen Bauteils (32, 43) und der Versteifungshohlprofilwand (22).

## Claims

1. Method of manufacturing a stiffened polymer-based sheet member (12), in particular for use in aircraft construction, comprising a polymer-based sheet member (32, 34) and polymer-based stiffening profiles (10, 23) attached thereto, comprising at least the following steps:
a) providing hollow stiffening profiles (10, 23) comprising thermoplastic composite material, a sheet-like component (32, 34) comprising thermoplastic composite material, a moulding tool (26, 42) and a gas-tight container (24, 25);
b) placing the hollow stiffening profiles (10, 23) and the flat component (32, 34) on the surface of the mould (26, 42) while bringing a hollow stiffening profile wall (22) of the hollow stiffening profiles (10, 23) into surface contact with the flat component (32, 34);
**characterised by** the steps of
c) heating the assembly obtained in step b) in the gas-tight container (24, 25) with a heating fluid (38) under excess pressure, the temperature of which is above the melting temperature of the thermoplastic composite material, and/or in the gas-tight container (24, 25) subjected to excess pressure with a heating device formed in the moulding tool (26, 42), which heats at least the mould surface to a temperature above the melting temperature of the thermoplastic composite material, with cooling of the hollow stiffening profiles (10, 23) with a cooling fluid (40) flowing through the cavity (36) of the hollow stiffening profiles (10, 23) under excess pressure at a temperature below the melting temperature of the thermoplastic composite material;
d) cooling the assembly to ambient temperature while joining the hollow stiffening profile walls (22) to the flat component (32, 34).

2. Method according to claim 1,
**characterised in that** the hollow stiffening profiles (10, 23) are closed omega stringers (23) which comprise an omega stringer (14) with stringer cap (18), stringer webs (20) and stringer feet (21) and an omega stringer (14) connected to the stringer feet (21), in particular materially bonded to the stringer feet (21), or a cover layer forming the stringer feet (21), the cover layer (16) or the stringer feet (21) forming the stiffening hollow profile wall (22) which is provided for the planar contact with the planar component (32, 34).

3. Method according to any one of claims 1 and 2,
**characterised in that** step a) comprises one, more or all of the following steps:
a1) providing hollow stiffening profiles (10, 23) and/or a sheet-like component (32, 34) comprising a thermoplastic composite material comprising:
- one or more thermoplastic polymers as matrix material selected from high temperature thermoplastic polymers, high performance plastics, semi-crystalline high performance plastics, poly-aryletherketones, such as polyetherketone-ketone, polyetherketone, polylyetheretherketones, polyetheretherketone, polyetherketone-ketone and polyetherketone-etherketone, and
- a reinforcing material, preferably synthetic fibres, more preferably carbon fibres, embedded in the matrix material; and/or
a2) providing a mould (26, 42), in particular a male mould (26) with cavities (28) for receiving the hollow stiffening profiles (10, 23); and/or
a3) providing a mould (26), in particular a male mould (26), with cavities (28) for receiving the hollow stiffening profiles (10, 23) and with a hollow stiffening profile cooling unit (30) which is formed adjacent to the cavities (28) in the mould (26); and/or
a4) providing a male mould tool (26) having a convex shaped surface area for depositing the flat component (32, 34); and/or
a5) providing a female mould (42) having a concave shaped surface portion for depositing the flat component (32, 34); and/or
a6) providing a mould (26, 42), in particular a female mould (42), with a heating device for heating the assembly of flat component (32, 34) and hollow stiffening profiles (10, 23) deposited on the mould (26, 42); and/or
a7) providing an autoclave (25) or pressclave as a gas-tight container (24).

4. Method according to any one of the preceding claims,
**characterised in that**
Step b) comprises one, more or all of the following steps:
b1) arranging the hollow stiffening profiles (10, 23) in the cavities (28) of the mould (26) and depositing the flat component (32, 34) on the surface of the mould (26); and/or
b2) placing the flat component (32, 34) on the surface of the mould (42) and positioning the hollow stiffening profiles (10, 23) on the surface of the flat component (32, 34); and/or
b3) bringing the surface of the cover layer (16) of the closed omega stringers (23) into contact with the surface of the flat component (32, 34).

5. Method according to one of the preceding claims,
**characterised in that** step c) comprises one, more or all of the following steps:
c1) using air or an inert gas as heating fluid (38) and/or as cooling fluid (40); and/or
c2) using a heating fluid (38) and/or a heated mould tool (26, 42) having a temperature at least about 10°C above the melting temperature of the thermoplastic composite and/or a cooling fluid (40) having a temperature at least about 50°C below the melting temperature of the thermoplastic composite; and/or
c3) using a heating fluid (38) and/or a heated mould tool (26, 42) having a temperature of about 5°C to about 120°C, preferably about 10°C to about 100°C, more preferably about 10°C to about 80°C, more preferably about 10°C to about 60°C above the melting temperature of the thermoplastic composite and a cooling fluid (40) having a temperature of about 50°C to about 250°C, preferably about 60°C to about 180°C, more preferably about 70°C to about 160°C, more preferably about 90°C to about 140°C below the melting temperature of the thermoplastic composite; and/or
c4) using a heating fluid (38) and/or a heated mould tool (26, 42) in combination with a cooling fluid (40), the temperature of which is selected such that the flat component (32, 34) and the hollow stiffening profile wall (22), in particular only the side of the stiffening profile wall (22) adjacent to the flat component (32, 34), are heated to a temperature below the melting temperature of the thermoplastic composite material, 34), are heated above the melting temperature of the thermoplastic composite material and the other sections of the hollow stiffening profiles (10, 23) remain at a temperature below the melting temperature of the thermoplastic composite material; and/or
c5) using a heating fluid (38) and/or a heated moulding tool (26, 42) in combination with a cooling fluid (40), the temperature of which is selected such that the stiffening hollow section wall (22) and the flat component (32, 34) can be joined to one another in a materially bonded manner and/or the other sections of the stiffening hollow sections (10, 23) remain dimensionally stable and/or the stiffening hollow sections (10, 23) remain airtight.

6. Method according to any one of the preceding claims,
**characterised in that** step c) comprises:
c7) generating a pressure pA in the range of about 2 to 40 bar, for example about 8 to 12 bar, by generating pressure in the gas-tight container (24, 25) and/or by an external pressure generating system; and/or
c8) generating an overpressure in the stiffening hollow profiles (10, 23), at which the stiffening hollow profile wall (22) of the stiffening hollow profile (10, 23) or the cover layer (16) of the closed omega stringers (23) exactly follows the desired surface shape of the aircraft component; and/or
c9) creating an overpressure in the gap (29), if any, between the cavities (28) and the stiffening hollow sections (10, 23) deposited in the cavities (28).

7. Method according to any one of the preceding claims,
**characterised in that** the cooling of the hollow stiffening sections (10, 23) in step c) comprises one, more or all of the following steps:
c10) introducing heating fluid (38) from the gas-tight container (24, 25) into a fluid conduit A (44) formed in the male mould (26) and equipped with a fluid cooling unit A (46) for cooling the heating fluid (38), and introducing the formed cooling fluid (40) into the cavity (36) in the stiffening hollow sections (10, 23);
c11) leading heating fluid (38) out of the gas-tight container (24, 25) into an external fluid line B (48) equipped with a fluid cooling unit B (50) for cooling the heating fluid (38) and introducing the cooling fluid (40) formed into the gas-tight container (24, 25) and subsequently into the cavity (36) in the stiffening hollow profiles (10, 23);
c12) generating pressurised cooling fluid (40) outside the gas-tight container (24, 25) in a separate pressure supply system and/or with a pump (54) and introducing the cooling fluid (40) through a fluid line C (52) into the gas-tight container (24, 25) and subsequently the cavity (36) in the stiffening hollow sections (10, 23); and/or
c13) using a cooled or insulated hose or pipe for introducing the pressurised cooling fluid (40) into the cavity (36); and/or
c14) introducing the pressurised cooling fluid (40) into the cavity (40) through an end opening of the stiffener hollow profiles (10, 23) and/or through one or more openings in a web (20) of the closed omega stringers (23), in particular using an inlet valve (60); and/or
c15) cooling the cooling fluid (40) supplied from outside the gas-tight container (24, 25) with a fluid cooling unit C (56) inside the gas-tight container (24, 25); and/or
c16) introducing cooling fluid under excess pressure into the gap (29), if any, between the cavities (28) and the hollow stiffening sections (10, 23) deposited in the cavities (28).

8. Method according to any one of the preceding claims,
**characterized in that** step d) comprises one, more or all of the following steps:
d1) cooling the assembly by leaving it to cool in ambient air; and/or
d2) cooling the assembly by active cooling with a cooling medium; and/or
d3) cooling by actively cooling and/or allowing to cool the assembly while maintaining the joining pressure prevailing in the gas-tight container (24, 25) until the temperature of the assembly is below the temperature required for the material closure, in particular below the continuous use temperature, preferably below the heat distortion temperature, more preferably below the glass transition temperature of the thermoplastic composite material.

9. Method according to one of the preceding claims,
**characterized in that**
the hollow stiffening profiles (10, 23) in the cavities (28) of the mould (26) are cooled by a cooling medium flowing through the hollow stiffening profile cooling unit (30) formed in the mould (26) adjacent to the cavities (28).

10. Method according to any one of the preceding claims,
**characterised in that**
a vacuum film is deposited on the arrangement of hollow stiffening profiles (10, 23) and flat component (32, 34) and a vacuum is then produced between the vacuum film and the surface of the mould (26, 42) and/or the surface of the flat component (32, 34) and/or the surface of the hollow stiffening profiles (10, 23).

11. Apparatus for carrying out the method according to any one of claims 1 to 10, comprising:
a) a mould (26, 42), in particular a male mould (26) or a female mould (42), having a surface for arranging hollow stiffening profiles (10, 23) and a flat component (32, 34) comprising a thermoplastic composite material; and/or
b) a mould (26, 42) provided with a heating device for heating the assembly of hollow stiffening profiles (10, 23) and a flat component (32, 34);
**characterised by**
c) a gas-tight container (24) for heating the assembly of hollow stiffening sections (10, 23) and flat component (32, 34) under excess pressure;
d) cooling means for cooling the hollow stiffening sections (10, 23), comprising:
- a fluid line A (44) inside the male mould (26) connecting the inner space of the gas-tight container (24, 25) with the cavity (36) in the stiffening hollow sections (10, 23), which is equipped with a fluid cooling unit A (44), for introducing and cooling heating fluid (38) and transferring the formed cooling fluid (40) into the cavity (36) of the stiffening hollow sections (10, 23); and/or
- a fluid conduit B (48) leading out of the gas-tight container (24, 25) equipped with a fluid cooling unit B (50) for leading out and cooling heating fluid (38), and a return into the gas-tight container (24, 25) for introducing the formed cooling fluid (40) into the cavity (36) in the stiffening hollow profiles (10, 23); and/or
- an external pressure generating device, such as a pump (54), for providing pressurised cooling fluid (40) outside the gas-tight container (24, 25) and a fluid conduit C for introducing the generated cooling fluid (40) into the cavity (36) in the hollow stiffening profiles (10, 23); and/or
- a fluid cooling unit C (56) within the gas-tight container (24, 25) for cooling the cooling fluid (40) supplied through the fluid line B (48) and the fluid line C (52), respectively.

12. Apparatus according to claim 11,
**characterized in that**
the mould (26) comprises
- cavities (28) for receiving the hollow stiffening profiles (10, 23)
- cavities (28) for receiving the hollow stiffening profiles (10, 23) with an adjoining cooling unit (30) formed in the mould (26) for cooling the hollow stiffening profiles (10, 23) with a cooling fluid (40); and/or
- cavities (28) for receiving the hollow stiffening profiles, the surface of which is coated with an insulation, such as polytetrafluoroethylene or ceramics, for thermally insulating the interior of the cavities (28) from the mould (26, 42)
- a mould (26, 42), in particular a female mould (42); with a heating device formed in the mould, in particular adjacent to the surface of the mould (26, 42), for heating the arrangement of hollow stiffening profiles (10, 23) and flat component (32, 34) in the contact region of the flat component (32, 43) and the hollow stiffening profile wall (22).

## Revendications

1. Procédé de fabrication d'une pièce plane raidie (12) à base de polymère, en particulier pour une utilisation dans la construction d'aéronefs, comprenant une pièce plane (32, 34) à base de polymère et des profilés de raidissement (10, 23) à base de polymère fixés à celle-ci, qui comprend au moins les étapes suivantes :
a) fournir des profilés creux de renforcement (10, 23) comprenant un matériau composite thermoplastique, un élément de construction plat (32, 34) comprenant un matériau composite thermoplastique, un outil de moulage (26, 42) et un récipient étanche aux gaz (24, 25) ;
b) disposer les profilés creux de renforcement (10, 23) et l'élément de construction plat (32, 34) sur la surface de l'outil de moulage (26, 42) en mettant en contact plat une paroi de profilé creux de renforcement (22) des profilés creux de renforcement (10, 23) avec l'élément de construction plat (32, 34) ;
**caractérisé par** les étapes consistant à
c) chauffer l'ensemble obtenu à l'étape b) dans le récipient étanche aux gaz (24, 25) avec un fluide de chauffage (38) en surpression, dont la température est supérieure à la température de fusion du matériau composite thermoplastique, et/ou dans le récipient étanche aux gaz (24, 25) en surpression avec un dispositif de chauffage formé dans le moule (26, 42), qui chauffe au moins la surface de l'outil de moulage à une température supérieure à la température de fusion du matériau composite thermoplastique, en refroidissant les profilés creux de raidissement (10, 23) avec un fluide de refroidissement (40) en surpression s'écoulant à travers l'espace creux (36) des profilés creux de raidissement (10, 23) à une température inférieure à la température de fusion du matériau composite thermoplastique ;
d) refroidissement de l'ensemble à la température ambiante avec assemblage par liaison de matière des parois des profilés creux de rigidification (22) avec la pièce plane (32, 34).

2. Procédé selon la revendication 1,
**caractérisé en ce que** les profilés creux de raidissement (10, 23) sont des oméga-stringers fermés (23) qui comprennent un oméga-stringers (14) avec un capuchon de stringers (18), des entretoises de stringers (20) et des pieds de stringers (21) et un élément de liaison relié aux pieds de stringers (21), notamment par liaison de matière, ou une couche de recouvrement formant les pieds de stringers (21), la couche de recouvrement (16) ou les pieds de stringers (21) formant la paroi de profilé creux de renfort (22) qui est prévue pour le contact à plat avec l'élément de construction plat (32, 34).

3. Procédé selon l'une des revendications 1 et 2,
**caractérisé en ce que** l'étape a) comprend une, plusieurs ou toutes les étapes suivantes :
a1) fournir des profilés creux de renfort (10, 23) et/ou un élément de construction plat (32, 34) comprenant un matériau composite thermoplastique comprenant :
- un ou plusieurs polymères thermoplastiques comme matériau de matrice, choisis parmi les polymères thermoplastiques à haute température, les plastiques à haute performance, les plastiques semi-cristallins à haute performance, les poly-arylé-thercétones, telles que la polyéthercétone-cétone, la polyéthercétone, les po-lylé-thercétones, la polyétheréthercétone, la polyétheréthercétone et la polyéthercétone-éthercétone-cétone, et
- un matériau de renforcement, de préférence des fibres synthétiques, de préférence des fibres de carbone, qui est/sont incorporé(s) dans le matériau de matrice ; et/ou
a2) fournir un outil de moulage (26, 42), en particulier un outil de moulage mâle (26) avec des cavités (28) pour recevoir les profilés creux de renforcement (10, 23) ; et/ou
a3) fournir un outil de moulage (26), en particulier un outil de moulage mâle (26), avec des cavités (28) pour recevoir les profilés creux de renforcement (10, 23) et avec une unité de refroidissement de profilés creux de renforcement (30) qui est formée de manière adjacente aux cavités (28) dans l'outil de moulage (26) ; et/ou
a4) fournir un moule mâle (26) avec une zone de surface de forme convexe pour déposer le composant plat (32, 34) ; et/ou
a5) mise à disposition d'un moule femelle (42) avec une zone de surface de forme concave pour déposer la pièce plate (32, 34) ; et/ou
a6) mise à disposition d'un outil de moulage (26, 42), en particulier d'un outil de moulage femelle (42), avec un dispositif de chauffage pour chauffer l'ensemble de la pièce plate (32, 34) et des profilés creux de renforcement (10, 23) déposés sur l'outil de moulage (26, 42) ; et/ou
a7) mise à disposition d'un autoclave (25) ou d'un press-clave en tant que récipient étanche aux gaz (24).

4. Procédé selon l'une des revendications précédentes,
**caractérisé en ce que**
L'étape b) comprend une, plusieurs ou toutes les étapes suivantes :
b1) disposer les profilés creux de raidissement (10, 23) dans les cavités (28) de l'outil de moulage (26) et déposer l'élément plat (32, 34) sur la surface de l'outil de moulage (26) ; et/ou
b2) disposer l'élément plat (32, 34) sur la surface de l'outil de moulage (42) et positionner les profilés creux de raidissement (10, 23) sur la surface de l'élément plat (32, 34) ; et/ou
b3) mise en contact de la surface de la couche de recouvrement (16) des cordons oméga fermés (23) avec la surface de la pièce plate (32, 34).

5. Procédé selon l'une quelconque des revendications précédentes,
**caractérisé en ce que** l'étape c) comprend une, plusieurs ou toutes les étapes suivantes :
c1) utiliser de l'air ou un gaz inerte comme fluide de chauffage (38) et/ou comme fluide de refroidissement (40) ; et/ou
c2) utiliser un fluide de chauffage (38) et/ou un moule chauffé (26, 42) ayant une température supérieure d'au moins environ 10°C à la température de fusion du matériau composite thermoplastique et/ou un fluide de refroidissement (40) ayant une température inférieure d'au moins environ 50°C à la température de fusion du matériau composite thermoplastique ; et/ou
c3) utiliser un fluide de chauffage (38) et/ou un moule chauffé (26, 42) ayant une température d'environ 5°C à environ 120°C, de préférence d'environ 10°C à environ 100°C, de préférence encore d'environ 10°C à environ 80°C, de préférence environ 10°C à environ 60°C au-dessus de la température de fusion du matériau composite thermoplastique et d'un fluide de refroidissement (40) ayant une température d'environ 50°C à environ 250°C, de préférence d'environ 60°C à environ 180°C, de préférence d'environ 70°C à environ 160°C, de préférence encore d'environ 90°C à environ 140°C en dessous de la température de fusion du matériau composite thermoplastique ; et/ou
c4) utilisation d'un fluide de chauffage (38) et/ou d'un outil de moulage chauffé (26, 42) en combinaison avec un fluide de refroidissement (40), dont la température est choisie de telle sorte que la pièce plate (32, 34) et la paroi du profilé creux de renforcement (22), en particulier seulement le côté adjacent à la pièce plate (32, 34) de la paroi du profilé creux de renforcement (22) sont chauffés au-dessus de la température de fusion du matériau composite thermoplastique et que les autres sections des profilés creux de renforcement (10, 23) restent à une température inférieure à la température de fusion du matériau composite thermoplastique ; et/ou
c5) utilisation d'un fluide de chauffage (38) et/ou d'un moule chauffé (26, 42) en combinaison avec un fluide de refroidissement (40), dont la température est choisie de telle sorte que la paroi du profilé creux de renforcement (22) et l'élément de construction plat (32, 34) puissent être reliés entre eux par liaison de matière et/ou que les autres sections des profilés creux de renforcement (10, 23) restent indéformables et/ou que les profilés creux de renforcement (10, 23) restent étanches à l'air.

6. Procédé selon l'une quelconque des revendications précédentes,
**caractérisé en ce que** l'étape c) comprend :
c7) générer une pression pA dans la plage d'environ 2 à 40 bars, par exemple d'environ 8 à 12 bars, par génération de pression dans le conteneur étanche aux gaz (24, 25) et/ou par un système de génération de pression externe ; et/ou
c8) génération d'une surpression dans les profilés creux de renforcement (10, 23), dans laquelle la paroi (22) du profilé creux de renforcement (10, 23) ou la couche de recouvrement (16) des cordons oméga fermés (23) suit exactement la forme de surface visée du composant d'aéronef ; et/ou
c9) créer une surpression dans l'espace (29) éventuellement présent entre les cavités (28) et les profilés creux de renfort (10, 23) déposés dans les cavités (28).

7. Procédé selon l'une quelconque des revendications précédentes,
**caractérisé en ce que** le refroidissement des profilés creux de raidissement (10, 23) à l'étape c) comprend une, plusieurs ou la totalité des étapes suivantes :
c10) l'introduction de fluide de chauffage (38) depuis le réservoir étanche aux gaz (24, 25) dans un conduit de fluide A (44) formé dans le moule mâle (26) et équipé d'une unité de refroidissement de fluide A (46) pour refroidir le fluide de chauffage (38), et l'introduction du fluide de refroidissement (40) formé dans la cavité (36) dans les profilés creux de raidissement (10, 23) ;
c11) faire sortir le fluide de chauffage (38) du récipient étanche aux gaz (24, 25) dans une conduite de fluide externe B (48) équipée d'une unité de refroidissement de fluide B (50) pour refroidir le fluide de chauffage (38), et introduire le fluide de refroidissement formé (40) dans le récipient étanche aux gaz (24, 25) et ensuite dans la cavité (36) dans les profilés creux de raidissement (10, 23) ;
c12) produire un fluide de refroidissement (40) sous surpression à l'extérieur du récipient étanche aux gaz (24, 25) dans un système de production de pression séparé et/ou avec une pompe (54) et introduire le fluide de refroidissement (40) par une conduite de fluide C (52) dans le récipient étanche aux gaz (24, 25) et ensuite dans la cavité (36) dans les profilés creux de renforcement (10, 23) ; et/ou
c13) utiliser un tuyau ou un tube refroidi ou isolé pour introduire le fluide de refroidissement sous pression (40) dans la cavité (36) ; et/ou
c14) l'introduction du fluide de refroidissement sous pression (40) dans la cavité (40) à travers une ouverture d'extrémité des profilés creux de renforcement (10, 23) et/ou à travers une ou plusieurs ouvertures dans une âme (20) des cordons oméga fermés (23), en particulier en utilisant une soupape d'admission (60) ; et/ou
c15) refroidir le fluide de refroidissement (40) amené de l'extérieur du récipient étanche aux gaz (24, 25) avec une unité de refroidissement de fluide C (56) à l'intérieur du récipient étanche aux gaz (24, 25) ; et/ou
c16) introduction de fluide de refroidissement en surpression dans l'espace (29) éventuellement présent entre les cavités (28) et les profilés creux de renforcement (10, 23) déposés dans les cavités (28).

8. Procédé selon l'une quelconque des revendications précédentes,
**caractérisé en ce que** l'étape d) comprend une, plusieurs ou toutes les étapes suivantes :
d1) refroidir l'ensemble en le laissant refroidir à l'air ambiant ; et/ou
d2) refroidir l'ensemble en le refroidissant activement avec un fluide de refroidissement ; et/ou
d3) refroidir par refroidissement actif et/ou laisser refroidir l'ensemble en maintenant la pression d'assemblage régnant dans le récipient étanche aux gaz (24, 25), jusqu'à ce que la température de l'ensemble soit inférieure à la température nécessaire pour la fermeture de la matière, en particulier à la température d'utilisation permanente, de préférence à la température d'intégrité du thermoformage, de manière particulièrement préférée à la température de transition vitreuse du matériau composite thermoplastique.

9. Procédé selon l'une des revendications précédentes,
**caractérisé en ce que**
les profilés creux de renfort (10, 23) dans les cavités (28) du moule (26) sont refroidis par un fluide de refroidissement qui s'écoule à travers l'unité de refroidissement de profilés creux de renfort (30) formée dans le moule (26) de manière adjacente aux cavités (28).

10. Procédé selon l'une quelconque des revendications précédentes,
**caractérisé en ce que**
on dépose un film sous vide sur l'ensemble constitué par les profilés creux de rigidification (10, 23) et la pièce plane (32, 34), puis on crée un vide entre le film sous vide et la surface de l'outillage de moulage (26, 42) et/ou la surface de la pièce plane (32, 34) et/ou la surface des profilés creux de rigidification (10, 23).

11. Dispositif pour la mise en oeuvre du procédé selon l'une des revendications 1 à 10, comprenant :
a) un outil de moulage (26, 42), en particulier un outil de moulage mâle (26) ou un outil de moulage femelle (42), avec une surface pour disposer des profilés creux de raidissement (10, 23) et un élément de construction plat (32, 34), qui comprennent un matériau composite thermoplastique ; et/ou
b) un outil de moulage (26, 42) qui est équipé d'un dispositif de chauffage pour chauffer l'agencement de profilés creux de renforcement (10, 23) et d'un composant plat (32, 34) ;
**caractérisé par**
c) un récipient (24) étanche aux gaz pour chauffer l'ensemble constitué par les profilés creux de renforcement (10, 23) et l'élément de construction plat (32, 34) sous une surpression ;
d) des installations de refroidissement pour refroidir les profilés creux de raidissement (10, 23), qui comprennent :
- une conduite de fluide A (44) à l'intérieur du moule mâle (26), reliant l'intérieur du récipient étanche aux gaz (24, 25) à la cavité (36) dans les profilés creux de raidissement (10, 23), équipée d'une unité de refroidissement de fluide A (44), pour introduire et refroidir le fluide de chauffage (38) et faire passer le fluide de refroidissement formé (40) dans la cavité (36) des profilés creux de raidissement (10, 23) ; et/ou
- un conduit de fluide B (48) sortant du récipient étanche aux gaz (24, 25), équipé d'une unité de refroidissement de fluide B (50), pour faire sortir et refroidir le fluide de chauffage (38), et un retour dans le récipient étanche aux gaz (24, 25) pour introduire le fluide de refroidissement formé (40) dans la cavité (36) dans les profilés creux de raidissement (10, 23) ; et/ou
- un dispositif de génération de pression externe, tel qu'une pompe (54), pour fournir un fluide de refroidissement (40) en surpression à l'extérieur du récipient étanche aux gaz (24, 25) et une conduite de fluide C pour introduire le fluide de refroidissement (40) généré dans la cavité (36) des profilés creux de raidissement (10, 23) ; et/ou
- une unité de refroidissement de fluide C (56) à l'intérieur du conteneur étanche aux gaz (24, 25) pour refroidir le fluide de refroidissement (40) fourni par la conduite de fluide B (48) ou la conduite de fluide C (52).

12. Dispositif selon la revendication 11,
**caractérisé en ce que**
le moule (26) comprend :
- cavités (28) destinées à recevoir les profilés creux de raidissement (10, 23)
- cavités (28) destinées à recevoir les profilés creux de raidissement (10, 23), avec une unité de refroidissement (30) adjacente à celles-ci, formée dans l'outil de moulage (26), pour refroidir les profilés creux de raidissement (10, 23) avec un fluide de refroidissement (40) ; et/ou
- des cavités (28) destinées à recevoir les profilés creux de raidissement, dont la surface est revêtue d'un isolant, comme du polytétrafluoroéthylène ou de la céramique, pour isoler thermiquement l'intérieur des cavités (28) de l'outil de moulage (26, 42)
- un outil de moulage (26, 42), en particulier un outil de moulage femelle (42) ; avec un dispositif de chauffage réalisé dans l'outil de moulage, en particulier au voisinage de la surface supérieure de l'outil de moulage (26, 42), pour chauffer l'ensemble constitué de profilés creux de raidissement (10, 23) et d'un composant plat (32, 34) dans la zone de contact du composant plat (32, 43) et de la paroi de profilé creux de raidissement (22).
